(19) **Europäisches Patentamt / European Patent Office / Office européen des brevets**

(11) **EP 1 590 424 B1**

(12) **FASCICULE DE BREVET EUROPEEN**

(45) Date de publication et mention
de la délivrance du brevet:
**01.08.2007   Bulletin 2007/31**

(51) Int Cl.:
*C10G 47/14* (2006.01)     *C10G 45/62* (2006.01)
*B01J 23/40* (2006.01)     *B01J 23/42* (2006.01)
*B01J 23/44* (2006.01)     *B01J 35/10* (2006.01)
*B01J 21/12* (2006.01)     *C10G 65/12* (2006.01)
*C10G 65/10* (2006.01)     *C10G 65/00* (2006.01)

(21) Numéro de dépôt: **04702736.2**

(22) Date de dépôt: **16.01.2004**

(86) Numéro de dépôt international:
**PCT/FR2004/000101**

(87) Numéro de publication internationale:
**WO 2004/076598 (10.09.2004 Gazette 2004/37)**

(54) **PROCEDE DE PRODUCTION DE DISTILLATS MOYENS PAR HYDROISOMERISATION ET HYDROCRAQUAGE DE CHARGES ISSUES DU PROCEDE FISCHER-TROPSCH**

VERFAHREN ZUR PRODUKTION VON MITTELDESTILLATEN DURCH HYDROISOMERISIERUNGUND HYDROCRACKEN VON EINSATZSTOFFEN AUS DEM FISCHER-TROPSCH-VERFAHREN

METHOD FOR THE PRODUCTION OF MIDDLE DISTILLATES BY  HYDROISOMERISATION ET HYDROCRACKING OF CHARGES ARRISING FROM THE FISCHER-TROPSCH METHOD

(84) Etats contractants désignés:
**DE FI**

(30) Priorité:  **27.01.2003   FR 0300945**

(43) Date de publication de la demande:
**02.11.2005   Bulletin 2005/44**

(73) Titulaires:
• **Institut Français du Pétrole**
  **92852 Rueil-Malmaison Cedex (FR)**
• **ENI S.p.A.**
  **00144 Roma (IT)**

(72) Inventeurs:
• **BENAZZI, Eric**
  **F-78400 Chatou (FR)**
• **EUZEN, Patrick**
  **F-75015 Paris (FR)**

(56) Documents cités:
**FR-A- 2 151 204          FR-A- 2 818 284**
**US-A- 3 843 509          US-A- 4 497 909**
**US-A- 4 959 338**

EP 1 590 424 B1

**EP 1 590 424 B1**

**Description**

La présente invention concerne un procédé de traitement avec hydrocraquage et hydroisomérisation, de charges issues du procédé Fischer-Tropsch, permettant d'obtenir des distillats moyens (gazole, kérosène) mettant en oeuvre un catalyseur comportant une silice-alumine particulière.

Dans le procédé Fischer-Tropsch, le gaz de synthèse (CO+H$_2$) est transformé catalytiquement en produits oxygénés et en hydrocarbures essentiellement linéaires sous forme gazeuse, liquide ou solide. Ces produits-sont généralement exempts d'impuretés hétéroatomiques telles que, par exemple, le soufre, l'azote ou des métaux. Ils ne contiennent également pratiquement peu ou pas d'aromatiques, de naphtènes et plus généralement de cycles en particulier dans le cas de catalyseurs au cobalt. Par contre, ils peuvent présenter une teneur non négligeable en produits oxygénés qui, exprimée en poids d'oxygène, est généralement inférieure à 5% poids environ et également une teneur en insaturés (produits oléfiniques en général) généralement inférieure à 10% en poids. Cependant, ces produits, principalement constitués de normales paraffines, ne peuvent être utilisés tels quels, notamment à cause de leurs propriétés de tenue à froid peu compatibles avec les utilisations habituelles des coupes pétrolières. Par exemple, le point d'écoulement d'un hydrocarbure linéaire contenant 20 atomes de carbone par molécule (température d'ébullition égale à 340°C environ c'est à dire souvent comprise dans la coupe distillat moyen) est de +37°C environ ce qui rend son utilisation impossible, la spécification étant de -15°C pour le gasoil. Les hydrocarbures issus du procédé Fischer-Tropsch comprenant majoritairement des n-paraffines doivent être transformés en produits plus valorisables tels que par exemple le gazole, kérosène, qui sont obtenus, par exemple, après des réactions catalytiques d'hydroisomérisation.

Le brevet EP-583,836 décrit un procédé pour la production de distillats moyens à partir de charge obtenue par la synthèse Fischer-Tropsch. Dans ce procédé, la charge est traitée dans sa globalité, tout au plus on peut enlever la fraction C$_4$ moins et obtenir la fraction C$_5^+$ bouillant à près de 100°C. Ladite charge est soumise à un hydrotraitement puis à une hydroisomérisation avec une conversion (de produits bouillant au-dessus de 370°C en produits à point d'ébullition inférieur) d'au moins 40% poids. Un catalyseur utilisable en hydroconversion est une formulation platine sur silice-alumine. Les conversions décrites dans les exemples sont d'au plus 60% poids. Le brevet EP-321,303 décrit également un procédé de traitement desdites charges en vue de produire des distillats moyens et éventuellement des huiles. Dans un mode de réalisation, des distillats moyens sont obtenus par un procédé consistant à traiter la fraction lourde de la charge, c'est à dire à point d'ébullition initial compris entre 232°C et 343°C, par hydroisomérisation sur un catalyseur fluoré contenant un métal du groupe VIII et de l'alumine et présentant des caractéristiques physico-chimiques particulières. Après hydroisomérisation, l'effluent est distillé et la partie lourde est recyclée en hydroisomérisation. La conversion en hydroisomérisation des produits 370°C+ est donnée comme comprise entre 50-95% pds et les exemples vont jusqu'à 85-87%.

Tous les catalyseurs utilisés actuellement en hydroisomérisation sont du type bifonctionnels associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est l'un des paramètres qui régissent l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Les performances de ces catalyseurs sont étroitement liées à leurs caractéristiques physico-chimiques, et plus particulièrement à leurs caractéristiques texturales. Ainsi et d'une façon générale, la présence de macropores dans les catalyseurs comportant une silice-alumine (tels que ceux décrits par exemple dans le brevet US 5370788) est un inconvénient. On entend par macropores, des pores dont le diamètre est supérieur à 500 Å.

En voulant résoudre ce problème la demanderesse a été conduite à préparer des catalyseurs d'hydrocraquage à base de silice-alumine à teneurs réduites en macropores et présentant des performances catalytiques améliorées dans les procédés d'hydrocraquage et d'hydroisomérisation de paraffines issues d'un procédé de synthèse Fischer-Tropsch.

La présente invention concerne donc un procédé pour la production de distillats moyens. Ce procédé permet :

-   d'améliorer fortement les propriétés à froid des paraffines issues du procédé Fisher-Tropsch et ayant des points

2

d'ébullition correspondants à ceux des fractions gazole et kérosène, (encore appelées distillats moyens) et notamment d'améliorer le point de congélation des kérosènes.

- d'augmenter la quantité de distillats moyens disponibles par hydrocraquage des composés paraffiniques les plus lourds, présents dans l'effluent de sortie de l'unité Fischer-Tropsch, et qui ont des points d'ébullition supérieurs à ceux des coupes kérosène et gazole, par exemple la fraction 380°C. et ce procédé met en oeuvre une silice-alumine particulière permettant d'obtenir des catalyseurs très sélectifs et actifs.

Plus précisément l'invention concerne un procédé de production de distillats moyens à partir d'une charge paraffinique produite par synthèse Fischer-Tropsch mettant en oeuvre un catalyseur d'hydrocraquage/hydroisomérisation particulier comportant:

- au moins un élément hydro-déshydrogénant choisi dans le groupe formé par les éléments nobles du groupe VIII de la classification périodique
- un support non zéolitique à base de silice-alumine contenant une quantité supérieure à 5% poids et inférieure ou égale à 95% poids de silice ($SiO_2$),
- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 100 et 550 m$^2$/g ,
- un volume poreux, mesuré par porosimétrie au mercure, compris dans les pores de diamètre supérieurs à 140 Å inférieur à 0,1 ml/g ;
- un volume poreux, mesuré par porosimétrie au mercure, compris dans les pores de diamètre supérieurs à 500 Å inférieur à 0.01 ml/g.
- un diagramme de diffraction X qui contient au moins les raies principales caractéristiques d'au moins une des alumines de transition comprise dans le groupe composé par les alumines alpha, rhô, chi, eta, gamma, kappa, thêta et delta.

## Description détaillée de l'invention

Techniques de caractérisation

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mesure selon la norme ASTM D4284-83 à une pression maximale de 4000 bar, utilisant une tension de surface de 484 dyne/cm et un angle de contact pour les supports silice-alumine amorphe de 140°. On définit le diamètre moyen mercure comme étant un diamètre tel que tous les pores de taille inférieure à ce diamètre constituent 50% du volume poreux ($V_{Hg}$), dans un intervalle compris entre 36 Å et 1000 Å. Une des raisons pour lesquelles il est préférable d'utiliser le support comme base pour définir la distribution poreuse tient dans le fait que l'angle de contact du mercure varie après imprégnation des métaux et ceci en fonction de la nature et de type de métaux. L'angle de mouillage , a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure.

Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å. Le volume V2 correspond au volume contenu dans les pores de diamètre supérieur au diamètre moyen moins 30 Å et inférieur au diamètre moyen plus 30 Å. Le volume V3 correspond au volume contenu dans les pores de diamètre supérieur au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur au diamètre moyen moins 15 Å et inférieur au diamètre moyen plus 15 Å. Le volume V6 correspond au volume contenu dans les pores de diamètre supérieur au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour $P/P_0$= 0.99, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6ème série. Tome I, fasc 4 pp. 169-209-(1971)".

La teneur en sodium a été mesurée par spectrométrie d'absorption thermique.

La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha ($\lambda K_{\alpha 1}$ = 1.7890 Å, $\lambda lK_{\alpha 2}$ =1.793 Å, rapport d'intensité $K_{\alpha 1}/ K_{\alpha 2}$ = 0.5). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 Å à 2,00 Å. On appelle d la distance interréticulaire qui est déduite de la position angulaire en utilisant la relation de Bragg (2 d (hkl) * sin (θ) = n *λ), Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta. Pour les positions des pics de diffraction des alumines éta, delta et thêta, on peut se référer à l'article de B.C. Lippens, J.J. Steggerda, dans Physical and Chemical aspects of adsorbents and catalysts, E.G. Linsen (Ed.), Academic Press, London. 1970, p.171-211.

Pour les supports et catalyseurs selon l'invention, le diagramme de diffraction X met en évidence un pic large caractéristique de la présence de silice amorphé.

Par ailleurs, dans l'ensemble du texte qui suit, lé composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les supports et catalyseurs selon l'invention ont été analysés par RMN MAS du solide de $^{27}$Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après:

Entre 100 et 40 ppm, aluminiums de type tétra-coordinés, notés $Al_{IV}$,

Entre 40 et 20 ppm, aluminiums de type penta-coordinés, notés $Al_V$,

Entre 20 et-100 ppm, aluminiums de type haxa-coordinés, notés $Al_{VI}$.

L'atome d'aluminium est un noyau quadripolaire. Dans certaines conditions d'analyse (champs de radiofréquence faible 30 kHz, angle d'impulsion faible: π/2 et échantillon saturé en eau), la technique de RMN de rotation à l'angle magique. (MAS) est une technique quantitative. La décomposition, des spectres RMN MAS permet d'accéder directement à la quantité des différentes espèces. La spectre est calé en déplacement chimique par rapport à une solution 1M de nitrate d'aluminium. Le signal d'aluminium est à zéro ppm. Nous avons choisi d'intégrer les signaux entre 100 et 20 ppm pour les $Al_{IV}$ et $Al_V$, ce qui correspond à l'aire 1, et entre 20 et -100 ppm pour $Al_{VI}$, ce qui correspond à l'aire 2. Dans l'exposé qui suit de l'invention, on entend par proportion des $Al_{VI}$, octaédriques le rapport suivant: aire 2/ (aire 1 + aire 2).

Une méthode de caractérisation des supports et catalyseurs selon l'invention pouvant être utilisée est la microscopie électronique par transmission (MET)..Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.

Pour ce type d'analyse, les échantillons sont finement broyés à sec dans un mortier , la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence dé 20 nm, de manière encore plus préférée 10, 5, 2 ou 1nm de diamètre. En mode balayé, la zone analysée sera fonction de la taille de la zone balayée et non plus de la taille du faisceau généralement réduit.

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne $Si/Al_m$ et l'écart type $\sigma$ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

La densité de remplissage tassée (DRT) est mesurée de la manière décrite dans l'ouvrage " Applied Heterogenous Catalysis " de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghern, Technip, Paris, 1987. Un cylindre gradué de dimensions acceptables est rempli de catalyseur ou de support par additions successives; et entre chaque addition, le catalyseur (ou le support) est tassé en secouant le cylindre jusqu'à atteindre un volume constant. Cette mesure est généralement réalisée sur 1000 $cm^3$ de catalyseur ou de support tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR), Les spectres IR sont enregistrés sur un interféromètre Nicolet de type Nexus-670 sous une résolution de 4 $cm^{-1}$ avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de 10-6 mbar). Le diamètre de la pastille est de 16 mm. L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :

- montée en température de 25°C à 300°C en 3 heures
- palier de 10 heures à 300 °C
- descente de température de 300°C à 25°C en 3 heures

La sonde basique (pyridine) est ensuite adsorbée à pression saturante à 25°C puis thermo-désorbée selon les paliers suivants :

- 25°C pendant 2 heures sous vide secondaire
- 100°C 1 heure sous vide secondaire
- 200°C 1 heure sous vide secondaire
- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450.$cm^{-1}$, tout épaulement étant inclus. Le nombre de sites de Bronsted est proportionnel à la surface du pic dont le maximum se situe vers 1545 $cm^{-1}$. Le rapport du nombre de sites de Bronsted /nombre de sites de Lewis est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

La présente invention, concerne un catalyseur d'hydrocraquage/hydroisomérisation qui comporte:

- un support non zéolitique à base de silice-alumine de teneur massique en silice ($SiO_2$) supérieure à 5%, poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,
- de préférence une teneur en impuretés cationiques inférieure à 0,1% poids, de manière préférée inférieure à 0,05% poids et de manière encore plus préférée inférieure à 0,025% poids. On entend par teneur en impuretés cationiques la teneur totale en alcalins.
- de préférence une teneur en impuretés anioniques inférieure à 1 % poids, de manière préférée inférieure à 0,5% poids et de manière encore plus préférée inférieure à 0,1 % poids.

La silice-alumine utilisée dans le procédé selon l'invention est de préférence une silice-alumine homogène à l'échelle du micromètre et dans laquelle la teneur en impuretés cationiques (par exemple $Na^+$) est inférieure à 0,1%poids, de manière préférée inférieure à 0,05% poids et de manière encore plus préférée inférieure à 0,025% poids et la teneur en impuretés anioniques (par exemple $SO_4^{2-}$, $Cl^-$) est inférieure à 1% poids, de manière préférée inférieure à 0,5% poids et de manière encore plus préférée inférieure à 0,1% poids.

Ainsi tout procédé de synthèse de silice-alumine connu de l'homme du métier conduisant à une silice-alumine homogène à l'échelle du micromètre et dans lequel les impuretés cationiques (par exemple Na$^+$) peuvent être ramenées à moins de 0,1 %, de manière préférée à une teneur inférieure à 0,05% poids et de manière encore plus préférée inférieure à 0,025% poids et dans lequel les impuretés anioniques (par exemple SO$_4$$^{2-}$, Cl) peuvent être ramenées à moins de 1% et de manière plus préférée inférieure à 0,05% poids convient pour préparer les supports objet de l'invention.

- au moins un élément hydro-déshydrogénant choisi dans le groupe formé par les éléments nobles du groupe VIII de la classification périodique, de manière préférée (et de préférence est essentiellement constitué de). 0,05% à 10% poids d'au moins un métal noble du groupe VIII déposé sur un support amorphe à base de silice alumine particulière telle que décrite précédemment. Pour ce type particulier de réaction, la fonction métallique est apportée par un métal noble du groupe VIII de la classification périodique des éléments et plus particulièrement le platine et/ou le palladium. La teneur en métal noble, exprimée en % poids de métal par rapport au catalyseur est de préférence comprise entre 0,05 et 10% poids, de manière encore plus préférée de 0,1 à 5 % poids.

- éventuellement au moins un élément dopant déposé sur le catalyseur et choisi dans le groupe formé par le phosphore, le bore et le silicium. Les teneurs massiques en bore, silicium, phosphore sous forme d'oxydes, sont comprises entre 0,1 et 15%, de préférence entre 0,1 et 10%, et encore plus avantageusement entre 0,1 et 5% poids. On entend par élément dopant un élément introduit après la préparation du support silico-aluminique décrit précédemment,

- un diamètre moyen poreux, mesuré par porosimétrie au mercure, compris entre 20 et 140 Å, de préférence entre 40 et 120 Å et de manière encore plus préférée entre 50 et 100 Å, de préférence un rapport entre le volume V2, mesuré par porosimétrie au mercure, compris, entre le D$_{moyen}$- 30 Å et le D$_{moyen}$ + 30 Å, sur le volume poreux total également mesuré par porosimétrie au mercure supérieur à 0,6, de préférence supérieur à 0,7 et de manière encore plus préférée supérieur à 0,8.

- de préférence un volume V3 compris dans les pores de diamètres supérieurs à D$_{moyen}$ + 30 Å, mesuré par porosimétrie au mercure, inférieur à 0,1 ml/g, de préférence inférieur à 0,06 ml/g et de manière encore plus préférée inférieur à 0,04 ml/g.

- de préférence un rapport entre le volume V5 compris entre le D$_{moyen}$ - 15 Å et le D$_{moyen}$ + 15 Å mesuré par porosimétrie au mercure, et le volume V2 compris entre le D$_{moyen}$ - 30 Å et le D$_{moyen}$ + 30 Å, mesuré par porosimétrie au mercure, supérieur à 0,6, de préférence supérieur à 0,7, et de manière encore plus préférée supérieur à 0,8.

- de préférence un volume V6 compris dans les pores de diamètres supérieurs à D$_{moyen}$ +15 Å, mesuré par porosimétrie au mercure, inférieur à 0,2 ml/g, de préférence inférieur à 0,1 ml/g et de manière encore plus préférée inférieur à 0,05 ml/g.

- un volume poreux total, mesuré par porosimétrie au mercure, compris entre 0,1 ml/g et 0,6, ml/g, de préférence compris entre 0,20 et 0,50 ml/g et de manière encore plus préférée supérieur à 0,20 ml/g,

- un volume poreux total, mesuré par porosimétrie azote, compris entre 0,1 ml/g et 0,6 ml/g, de préférence compris entre 0,20 et 0,50 ml/g,

- une surface spécifique BET comprise entre 100 et 550 m$^2$/g, de préférence comprise entre 150 et 500 m$^2$/g,

- de préférence une surface adsorption telle que le rapport entre la surface adsorption et la surface BET soit supérieur à 0,5, de manière préférée supérieur à 0,65 et de manière plus préférée supérieur à 0,8.

- un volume poreux, mesuré par porosimétrie au mercure, compris dans les pores de diamètre supérieurs à 140 Å inférieur à 0,1 ml/g , de préférence inférieur à 0,05 ml/g et de manière encore plus préférée inférieur à 0,03 ml/g.

- un volume poreux, mesuré par porosimétrie au mercure, compris dans les pores de diamètre supérieurs à 500 Å inférieur à 0,01 ml/g.

- un diagramme de diffraction X qui contient au moins les raies principales caractéristiques d'au moins une des alumines de transition comprise dans le groupe composé par les alumines rho, chi, kappa, eta, gamma, theta et delta et de manière préférée qui contient au moins les raies principales caractéristiques d'au moins une des alumines de transition compris dans le groupe composé par l'alumine gamma, éta, thêta et delta, et de manière plus préférée qui contient au moins les raies principales caractéristiques de l'alumine gamma et éta, et de manière encore plus préférée qui contient les pics à un d compris entre 1,39 à 1,40 Å et à un d compris entre 1,97 Å à 2,00 Å.

Les spectres RMN MAS du solide de $^{27}$Al des supports et catalyseurs montrent deux massifs de pics distincts. Un premier type d'aluminium dont le maximum résonne vers 10 ppm s'étend entre - 100 et 20 ppm. La position du maximum suggère que ces espèces sont essentiellement de type Al$_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondraient aux atomes d'Al$_{IV}$ (tétraédrique). Pour les supports et catalyseurs de la présente invention, avantageusement la proportion des Al$_{VI}$ octaédriques est supérieure à 50%, de manière préférée supérieure à 60%, et de manière encore plus préférée supérieure à 70%.

Dans un mode de réalisation de l'invention, le catalyseur contient un support comprenant au moins deux zones silico-aluminiques, les dites zones ayant des rapports Si/Al inférieurs ou supérieurs au rapport Si/Al global déterminé par fluorescence X. Ainsi un support.ayant un rapport Si/Al égal à 0,5 comprend par exemple deux zones silico-aluminiques, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le catalyseur contient un support comprenant une seule zone silico-aluminique, ladite zone ayant un rapport Si/Al égal au rapport Si/Al global déterminé par fluorescence X et inférieur à 2,3.

La densité de remplissage tassée des catalyseurs est généralement supérieure à 0,85 g/m$^3$, de manière préférée supérieure à 0,95 g/cm$^3$, de manière très préférée supérieure à 1,025 cm$^3$/g et de manière encore plus préférée supérieure à 1,1 g/cm$^3$.

L'acidité du support du catalyseur peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre 0,05 et 0,7, de manière très préférée entre 0,06 et 0,3 et de manière encore plus préférée entre 0,075 et 0,15.

Procédés de préparation

Les catalyseurs selon l'invention peuvent être préparés selon toutes les méthodes bien connues de l'homme du métier.

Un procédé préféré de préparation du catalyseur selon la présente invention comprend les étapes suivantes

Selon un mode de préparation préféré, le précurseur est obtenu par mise en forme directe de la silice-alumine seule ou par mise en forme de la silice-alumine avec au moins un liant, puis séchage et calcination. Les éléments des groupes VIB et/ou VIII, et éventuellement ceux choisis parmi le phosphore, le bore, le silicium et éventuellement les éléments des groupes VB, et VIIB, sont alors éventuellement introduits par toute méthode connue de l'homme du métier, avant ou après la mise en formé et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme la silice-alumine sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement ou en totalité, au moment du malaxage. Elle peut également être introduite par une ou plusieurs opérations d'échange ionique sur le support calciné constitué d'au moins une silicé-alumine, éventuellement mise en forme avec un liant, à l'aide de solutions contenant les sels précurseurs des métaux choisis. Elle peut aussi être introduite par une ou plusieurs opérations d'imprégnation du support mis en forme et calciné, par une solution des précurseurs des oxydes des métaux. Elle peut enfin également être introduite, de façon très préférée par une ou plusieurs opérations d'imprégnation du support calciné constitué d'au moins une silice-alumine selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention renferme donc au moins un élément du groupe VIII noble tel que ruthénium, rhodium, palladium, osmium, iridium ou platine. Parmi les métaux du groupe VIII noble on préfère employer au moins un métal choisi dans le groupe formé par le platine et le palladium.

Les éléments suivant : hors et/ou silicium et/ou phosphore peuvent être introduits dans le catalyseur à tout niveau de la préparation et selon toute technique connue de l'homme du métier.

Le catalyseur, généralement, ne contient pas d'halogène ajouté, autre que celui qui pourrait être introduit pour l'imprégnation, du métal noble par exemple.

Une méthode préférée selon l'invention consiste à déposer le ou les éléments dopants choisis, par exemple.le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur silice-alumine, il est possible d'imprégner ce précurseur par de la solution aqueuse de biborate d'ammonium et de silicone Rhodorsil E1P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

Le ou les élément(s) dopant(s) choisi(s) dans le groupe formé par le silicium, le bore et le phosphore peuvent être introduits par une ou plusieurs opérations d'imprégnation avec excès de solution sur le précurseur calciné.

Lorsque éventuellement au moins un élément dopant, B et/ou P et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de la silice-alumine selon l'invention.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la-pyridine et des quinoléines et les composés de la famille du pyrrole.

De nombreuses sources de silicium peuvent être employées. Ainsi, on peut utiliser l'orthosilicate d'éthyle Si$(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux nobles du groupe VIII du catalyseur de la présente invention peuvent être présents en totalité ou partiellement sous forme métallique et/ou oxyde.

Les sources d'éléments nobles du groupe VIII qui peuvent être utilisées sont bien connues de l'homme métier. Pour les métaux nobles on utilisera les halogénures, par exemple les chlorures, les nitrates, acides tels que l'acide chloroplatinique, les oxychlorures tels que l'oxychlorure ammoniacal de ruthénium.

Caractéristiques du support

Le catalyseur ainsi obtenu est préparé, par toute technique connue de l'homme du métier, à partir d'un support non zéolithique à base de silice-alumine (c'est-à-dire comprenant silice et alumine) dont les caractéristiques sont les suivantes :

- la teneur massique en silice ($SiO_2$) est supérieure à 5% poids et inférieure ou égale à 95% poids de silice ($SiCO_2$), de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,

- de préférence la teneur en impuretés cationiques est inférieure à 0,1%poids, de manière préférée inférieure à 0.05% poids et de manière encore plus préférée inférieure à 0,025% poids. On entend par teneur en impuretés cationiques la teneur.totale en alcalins.

- de préférence la teneur en impuretés anioniques est inférieure à 1% poids, de manière préférée inférieure à 0,5% poids et de manière encore plus préférée inférieure à 0,1% poids,

- le diamètre moyen poreux, mesuré par porosimétrie au mercure, est compris entre 20 et 140 Å, de préférence entre 40 et 120 Å et de manière encore plus préférée entre 50 et 100 Å,

- de préférence le rapport entre le volume V2, mesuré par porosimétrie au mercure, compris entre le $D_{moyen}$ - 30 Å et le $D_{moyen}$ + 30 Å sur le volume poreux total également mesuré par porosimétrie au mercure, est supérieur à 0,6, de préférence supérieur à 0,7 et de manière encore plus préférée supérieur à 0,8.

- de préférence le volume V3 compris dans les pores de diamètres supérieurs à $D_{moyen}$ + 30 Å, mesuré par porosimétrie au mercure, est inférieur à 0,1 ml/g, de préférence inférieur à 0,06 ml/g et de manière encore plus préférée inférieur à 0,04 ml/g.

- de préférence le rapport entre le volume V5, mesuré par porosimétrie au mercure, compris entre le $D_{moyen}$ - 15 Å et le $D_{moyen}$ + 15 Å sur le volume V2, mesuré par porosimétrie au mercure, compris entre le $D_{moyen}$- 30 Å et le $D_{moyen}$ + 30 Å supérieur à 0,6, de préférence supérieur à 0,7 et de manière encore plus préférée supérieur à 0,8.

- de préférence le volume. V6, compris dans les pores de diamètres supérieurs à $D_{moyen}$ + 15 Å et mesuré par porosimétrie au mercure est inférieur à 0,2 ml/g, de préférence inférieur à 0,1 ml/g et de manière encore plus préférée inférieur à 0,05 ml/g.

- le volume poreux total, mesuré par porosimétrie au mercure, est compris entre 0,1 ml/g et 0,6 ml/g, de préférence compris entre 0,20 et 0,50 ml/g et de manière encore plus préférée supérieur à 0,20 ml/g,

- le volume poreux total, mesuré par adsorption d'azote, est compris entre 0,1 ml/g et 0,6 ml/g, de préférence compris entre 0,20 et 0,50 ml/g,

- la surface spécifique BET est comprise entre 100 et 550 m$^2$/g, de préférence comprise entre 150 et 500 m$^2$/g,

- de préférence la surface adsorption est telle que le rapport entre la surface adsorption et la surface SET soit supérieur à 0,5 et de manière plus préférée supérieur à 0,65 et de manière encore plus préférée supérieur à 0,8.

- le volume poreux, mesuré par porosimétrie au mercure, compris dans les pores de diamètre supérieur à 140 Å est inférieur à 0,1 ml/g , de préférence inférieur à 0,05 ml/g et de manière encore plus préférée inférieur à 0,03 ml/g.

- le volume poreux, mesuré par porosimétrie au mercure, compris dans les pores de diamètre supérieurs à 500 Å est inférieur à 0,01 ml/g.

- le diagramme de diffraction X contient au moins les raies principales caractéristiques d'au moins une des alumines de transition comprise dans le groupe composé par les alumines alpha, rho, chi, kappa, êta, gamma, thêta et delta, de manière préférée il contient au moins les raies principales caractéristiques d'au moins une des alumines de transition comprises dans le groupe composé par l'alumine gamma, êta, thêta et delta, de manière plus préférée il contient au moins les raies principales caractéristiques de l'alumine gamma et êta et de manière encore plus préférée il contient les pics à un d compris entre 1,39 à 1,40 Å et à un d compris entre 1,97 Å à 2,00 Å .

Les spectres RMN MAS du solide de $^{27}$Al des supports montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondraient aux atomes d'$Al_{IV}$ (tétraédrique). Pour les supports et catalyseurs de la présente invention, avantageusement la proportion des $Al_{VI}$ octaédriques est supérieure à 50%, de manière préférée supérieure à 60%, et de manière encore plus préférée supérieure à 70%.

Dans un mode de réalisation de l'invention, le support comprend au moins deux zones silico-aluminiques ayant des rapports Si/Al inférieurs ou supérieurs au rapport Si/Al global déterminé par fluorescence X. Un support selon la présente invention ayant un rapport Si/Al global égal à 0,5 comprend par exemple deux zones silico-aluminiques, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le support comprend une seule zone silico-aluminique ayant un rapport Si/Al égal au rapport Si/Al global déterminé par fluorescence X et inférieur à 2,3.

L'acidité du support selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre à 0,05 et 0,7, de manière très préférée entre 0,06 et 0,3 et de manière encore plus préférée entre 0,075 et 0,15.

La densité de remplissage tassée des supports, après calcination, est généralement supérieure à 0,65 g/cm$^3$, de manière préférée supérieure à 0,72 g/cm$^3$, de manière très préférée supérieure à 0,75 g/cm$^3$ et de manière encore plus préférée supérieure à 0,78g/cm$^3$.

Préparation du support

Le demandeur a découvert que les supports silico-aluminiques obtenus à partir d'un mélange à quelque étape que ce soit d'un composé d'alumine partiellement soluble en milieu acide avec un composé de silice totalement soluble ou avec une combinaison totalement soluble d'alumine et de silice hydratées, mise en forme suivie d'un traitement hydrothermal ou thermique afin de l'homogénéiser à l'échelle micrométrique, voire à l'échelle nanométrique permettait d'obtenir un catalyseur particulièrement actif dans les procédés d'hydrocraquage. Par partiellement soluble en milieu acide, le demandeur entend que la mise en contact du composé d'alumine avant toute addition du composé de silice totalement soluble ou de la combinaison avec une solution acide par exemple d'acide nitrique ou d'acide sulfurique provoque leur dissolution partielle.

### Sources de silice

Les composés de silice utilisés selon l'invention peuvent avoir été choisi dans le groupe formé par l'acide silicique, les sols d'acide silicique, les silicates alcalins hydrosolubles, les sels cationiques de silicium, par exemple le métasilicate de sodium hydraté, le Ludox® sous forme ammoniacale ou sous forme alcaline, les silicates d'ammonium quaternaire. Le sol de silice peut être préparé selon l'une des méthodes connues de l'homme de l'art. De manière préférée, une solution d'acide orthosilicique décationisée est préparée à partir d'un silicate alcalin hydrosoluble par échange ionique sur une résine.

### Sources de silice-alumines totalement solubles

Les silice-alumines hydratées totalement solubles utilisées selon l'invention peuvent être préparées par coprécipitation vraie en conditions opératoires stationnaires maîtrisées (pH, concentration, température, temps de séjour moyen) par réaction d'une solution basique contenant le silicium, par exemple sous forme de silicate de sodium, optionnellement de l'aluminium par exemple sous forme d'aluminate de sodium avec une solution acide contenant au moins un sel d'aluminium par exemple le sulfate d'aluminium. Au moins un carbonate ou encore du $CO_2$ peut éventuellement être rajouté au milieu réactionnel.

Par coprécipitation vraie, le demandeur entend un procédé par lequel au moins un composé d'aluminium totalement soluble en milieu basique ou acide comme décrit ci-après, au moins un composé de silicium comme décrit ci-après sont mis en contact, simultanément ou séquentiellement, en présence d'au moins un composé précipitant et/ou coprécipitant de façon à obtenir une phase mixte essentiellement constituée de silice-alumine hydratée laquelle est éventuellement homogénéisée par agitation intense, cisaillement, broyage colloïdal ou encore par combinaison de ces opérations unitaires. Par exemple, ces silices-alumines hydratées peuvent avoir été préparées selon les enseignements des brevets américains US 2 908 635; US 3 423 332, US 3 433 747, US 3 451 947, US 3 629 152, US 3 650 988.

La dissolution totale du composé de silice ou de la combinaison a été évaluée de manière approchée selon la méthode suivante. Une quantité fixée (15 g) du composé de silice ou de la combinaison hydratée est introduite dans un milieu de pH préétabli. De manière préférée, la concentration de solide rapporté par litre de suspension est 0;2 mole par litre. Le pH de la solution de dispersion' est au moins de 12 et il peut être obtenu par utilisation d'une source alcaline. De manière préférée, il est intéressant d'utiliser NaOH. Le mélange est ensuite agité mécaniquement par un agitateur à turbine de type défloculeuse pendant 30 minutes à 800 t/min. Une fois, l'agitation terminée, le mélange est centrifugé 10 minutes à 3000 t/min. Le gâteau est séparé du liquide surnageant. La solution a été filtré sur un filtre de porosité 4 de diamètre 19 cm. On procède ensuite au séchage puis à la calcination à 1000°C des 2 fractions. Puis, on définit un rapport R égal en divisant la masse décantée par la masse de solide en suspension. Par totalement soluble, on entend un rapport R au moins supérieur à 0,9.

### Sources d'alumine

Les composés d'alumine utilisés selon l'invention sont partiellement solubles en milieu acide. Ils sont choisis tout ou en partie dans le groupe des composés d'alumine de formule générale $Al_2O_3$, $nH_2O$. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, et delta, qui se différencient essentiellement par l'organisation de leur structure cristalline. L'alumine alpha appelée communément corindon peut être incorporée dans une faible proportion dans le support selon l'invention.

Cette propriété de dissolution partielle est une propriété recherchée de l'invention, elle s'applique aux poudres d'alumine hydratées, aux poudres atomisées d'alumine hydratées, aux dispersions ou suspensions d'alumine hydratées ou à l'une quelconque de leur combinaison, avant une quelconque addition d'un composé contenant tout ou en partie du silicium.

La dissolution partielle du composé d'alumine a été évaluée de manière approchée selon la méthode suivante. Une quantité précise du composé d'alumine en poudre ou en suspension est introduite dans un milieu de pH préétabli. Le mélange est ensuite agité mécaniquement. Une fois, l'agitation terminée, le mélange est laissé sans agitation durant 24 heures. De manière préférée, la concentration de solide en $Al_2O_3$ rapportée par litre de suspension est 0,5 mole par litre. Le pH de la solution de dispersion est de 2 et est obtenu soit par utilisation de $HNO_3$, soit de HCl, soit de $HClO_4$. De manière préférée, il est intéressant d'utiliser. $HNO_3$. La répartition des fractions sédimentées et dissoutes a été suivie par dosage de l'aluminium par absorption UV. Les surnageants ont été ultrafiltrés (membrane de polyetherssulfones, Millipore NMWL : 30 000) et digérés dans de l'acide concentré. La quantité d'aluminium dans le surnageant correspond au composé d'alumine non sédimentée et à l'aluminium dissous et la fraction ultrafiltrée à l'aluminium dissous uniquement.

La quantité de particules sédimentées est déduite de la concentration théorique en aluminium dans la dispersion (en considérant que tout le solide introduit est dispersé) et des quantités de boehmite réellement dispersées et d'aluminium en solution.

Les précurseurs d'alumine utilisés selon la présente invention se distinguent donc de ceux utilisés dans le cas des co-précipitations vraies, qui sont entièrement solubles en milieu acide : sels cationiques d'alumine, par exemple le nitrate d'aluminium. Les méthodes faisant partie de l'invention se distinguent des co-précipitations vraies car l'un des éléments, en l'occurrence le composé d'aluminium, est partiellement soluble.

Pour mettre en oeuvre l'alumine, tout composé d'alumine de formule générale $Al_2O_3$, $nH_2O$ peut être utilisé. Sa surface spécifique est comprise entre 150 et 600 $m^2$/g. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, delta et alpha, qui se différencient essentiellement par l'organisation de leur structure cristalline. Lors de traitements thermiques, ces différentes formes sont susceptibles d'évolution entre elles, selon une filiation complexe qui dépend des conditions opératoires du traitement. On peut également utiliser dans des proportions mesurées l'alumine alpha appelée communément corindon.

L'hydrate d'aluminium $Al-O_3$, $nH_2O$ utilisé de manière plus préférentielle est la boehmite, la pseudo-boehmite et les gels d'alumine amorphe ou essentiellement amorphe. Un mélange de ces produits sous quelque combinaison que ce soit peut être également utilisé.

La boehmite est généralement décrite comme un monohydrate d'aluminium de formule $Al_2O_3$, $nH_2O$ qui englobe en réalité un large continuum de matériaux de degré d'hydratation et d'organisation variables avec des frontières plus ou moins bien définies : la boehmite gélatineuse la plus hydratée, avec n pouvant être supérieur à 2, la pseudo-boehmite ou la boehmite micro-cristalline avec n compris entre 1 et 2, puis la boehmite cristalline et enfin la boehmite bien cristallisée en gros cristaux avec n voisin de 1. La morphologie du monohydrate d'aluminium peut varier dans de larges limites entre ces deux formes extrêmes aciculaire ou prismatique. Tout un ensemble de forme variables peut être utilisé entre ces deux formes : chaîne, bateaux, plaquettes entrelacées.

La préparation et/ou la mise en forme de l'hydrate d'aluminium peuvent ainsi constituer la première étape de la préparation de ces catalyseurs. De nombreux brevets relatent la préparation et/ou la mise en forme de supports à base d'alumine de transition issues de monohydrate d'aluminium; US .3 520 654 ; US 3 630 670 ; US 3 864 461 ; US 4 154 812 ;US 4 313 923 ; DE 3243193; US 4 371 513.

Des hydrates d'aluminium relativement purs peuvent être utilisés sous forme de poudre amorphes ou cristallisés ou cristallisés contenant une partie amorphe. L'hydrate d'aluminium peut également être introduite sous forme de suspensions ou dispersions aqueuses. Les suspensions ou dispersions aqueuses d'hydrate d'aluminium mise en oeuvre selon l'invention peuvent être gélifiables ou coagulables. Les dispersions ou suspensions aqueuses peuvent également être obtenues ainsi qu'il est bien connu de l'homme de l'art par peptisation dans l'eau ou l'eau acidulée d'hydrates d'aluminium.

La dispersion d'hydrate d'aluminium peut être réalisée par tout procédé connu de l'homme de l'art: dans un réacteur en batch, un mélangeur en continu, un malaxeur, un broyeur colloïdal. Un tel mélange peut être également réalisé dans un réacteur à écoulement piston et, notamment dans un mélangeur statique. On peut citer les réacteurs Lightnin.

En outre, on peut également mettre en oeuvre comme source d'alumine une alumine ayant été soumis au préalable à un traitement susceptible d'améliorer son degré de dispersion. A titre d'exemple, on pourra améliorer la dispersion de la source d'alumine par un traitement d'homogénéisation préliminaire. Par homogénéisation, on peut utiliser au moins un des traitements d'homogénéisation décrit dans le texte qui suit.

Les dispersions ou suspensions aqueuses d'alumine que l'on peut mettre en oeuvre sont notamment les suspensions ou dispersions aqueuses de boehmites fines ou ultra-fines qui sont composés de particules ayant des dimensions dans le domaine colloïdal.

Les boehmites fines ou ultra-fines mises en oeuvre selon la présente invention peuvent notamment avoir été obtenues selon le brevet français FR 1 261 182 et 1 381 282 ou dans la demande de brevet européen n°15 196.

On peut mettre en oeuvre également les suspensions ou dispersions aqueuses obtenues à partir de pseudo-boehmite, de gels d'alumine amorphe, de gels d'hydroxyde d'aluminium ou d'hydrargillite ultra-fine.

Le monohydrate d'aluminium peut être acheté parmi une variété de sources commerciales d'alumine telle que notamment les PURAL®, CATAPAL®, DISPERAL®, DISPAL® commercialisés par la société SASOL ou encore HIQ® commercialisés par ALCOA, ou selon les méthodes connues de l'homme de l'art : elle peut être préparée par déshydratation partielle de trihydrate d'aluminium par des méthodes conventionnelles ou elle peut être préparée par précipitation. Lorsque ces alumines se présentent sous forme d'un gel, elles sont peptisées par l'eau ou une solution acidulée. Dans la précipitation, la source acide peut-être par exemple choisie parmi au moins un des composés suivants: le chlorure d'aluminium, le sulfate d'aluminium, le nitrate d'aluminium. La source basique d'aluminium peut être choisie parmi les sols basiques d'aluminium tels que l'aluminate de sodium et l'aluminate de potassium.

Comme agents précipitants l'hydroxyde de sodium, le carbonate de sodium, la potasse et l'ammoniaque pouvant être utilisés. Les agents précipitants sont choisis de telle manière que la source d'alumine selon la présente invention et ces agents soient précipités ensemble.

Selon la nature acide ou basique du composé de départ à base d'aluminium, on précipite l'hydrate d'aluminium à l'aide d'une base ou d'un acide choisi, par exemple parmi l'acide chlorhydrique, l'acide sulfurique, la soude ou un composé basique ou acide de l'aluminium tel que cités ci-dessus. Les deux réactifs peuvent être le sulfate d'aluminium et l'aluminate de soude. Pour un exemple de préparation de alpha-monohydrate d'aluminium utilisant le sulfate d'aluminium et l'aluminate de soude, on peut se référer notamment au brevet US 4 154 812.

La pseudo-boehmite peut notamment avoir été préparée selon le procédé décrit dans le brevet américain US 3 630 670 par réaction d'une solution d'aluminate alcalin avec une solution d'un acide minéral. La pseudo-boehmite peut notamment avoir été préparée selon le procédé décrit dans le brevet américain US 3 630 670 par réaction d'une solution d'aluminate alcalin avec une solution d'un acide minéral. Elle peut également avoir été préparée tel que décrit dans le brevet français FR 1 357 830.

Les gels d'alumine amorphe peuvent notamment avoir été préparés selon les procédés décrits dans l'article "Alcoa paper n°19 (1972) pages 9 à 12" et notamment par réaction d'aluminate d'acide ou d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les procédés décrits dans les brevets américains US 3 268 295 et 3 245 919.

Les gels d'hydroxyde d'aluminium peuvent notamment être ceux préparés selon les procédés décrits dans le brevet WO 00101617, par mélange d'une source acide d'aluminium et d'une base ou d'une source basique d'aluminium et d'un acide de manière à précipiter un monohydrate d'alumine, les étapes suivantes étant :

2. mûrissement
3. filtration
4. lavage, et
5. séchage,

procédés caractérisés en ce que le mélange de l'étape une est réalisé sans rétromélange.

L'hydrargilite ultra-fine peut notamment avoir été préparée selon le procédé décrit dans le brevet US 1 371 808, par évolution à une température comprise entre la température ambiante et 60°C de gels d'alumine sous forme de gâteau et contenant par rapport à l'alumine compté en molécules d'$Al_2O_3$ 0,1 ions acides monovalents.

On peut également mettre en oeuvre les suspensions, ou dispersions aqueuses de boéhmite ou de pseudo-boehmite ultra-pures préparées selon un procédé dans lequel on effectue la réaction d'un aluminate alcalin avec de l'anhydride carbonique pour former un précipité d'hydroxycarbonate d'aluminium amorphe, on sépare le précipité obtenu par filtration puis on lave celui-ci (le procédé est notamment décrit dans le brevet américain US 3 268 295).

Ensuite,

a) dans une première étape, on mélange le précipité lavé d'hydroxycarbonate d'aluminium amorphe avec une solution acide, d'une base ou d'un sel ou de leurs mélanges; ce mélange est effectué en versant la solution sur l'hydroxycarbonate, le pH du milieu ainsi constitué étant inférieur à 11,
b) dans une deuxième étape, on chauffe le milieu réactionnel ainsi constitué à une température inférieure à 90°C pendant un temps d'au moins 5 minutes
c) dans une troisième étape, on chauffe le milieu résultant de la deuxième étape à une température comprise entre 90°C et 250°C.

Les dispersions ou suspensions de boehmite et pseudo-boehmite obtenus selon ce procédé présentent une teneur en alcalins inférieure à 0,005% exprimée sous forme de rapport pondéral oxyde du métal alcalin /$Al_2O_3$.

Lorsqu'on désire fabriquer des supports de catalyseurs très purs, on utilise de préférence des suspensions ou dispersions de boehmites ou de pseudo-boehmites ultra-pures qui ont été obtenues selon le procédé qui a été décrit ci-dessus, ou les gels d'hydroxyde d'aluminium qui ont été préparés à partir de l'hydrolyse des alcoolates d'aluminium selon un procédé du type décrit dans le brevet américain US 2 892 858.

On décrit sommairement le procédé de fabrication qui conduit à de tels gels d'hydroxyde d'aluminium de type boehmite obtenue comme sous-produit dans la fabrication de l'alcool par hydrolyse d'un alcoolate ou alcoxyde d'aluminium (synthèse de Ziegler). Les réactions de synthèse d'alcools Ziegler sont décrites notamment dans le brevet américain US 2 892 858. Selon ce procédé, on prépare tout d'abord le triéthylaluminium à partir d'aluminium, d'hydrogène et d'éthylène, la réaction étant réalisée en deux étapes avec recyclage partiel du triéthylaluminium.

On ajoute de l'éthylène dans l'étape de polymérisation et on oxyde ensuite le produit obtenu en alcoolate d'aluminium, les alcools étant obtenus par hydrolyse.

Les gels d'hydroxyde d'aluminium peuvent également être ceux qui ont été préparés selon les procédés décrits dans les brevets américains US 4 676 928-A et US 6 030 599.

L'alumine hydratée obtenue comme sous-produit de la réaction de Ziegler est notamment décrite dans un bulletin de la société CONOCO du 19 janvier 1971.

La dimension des particules d'alumine constituant la source d'alumine peut varier dans de limites. Elle est généralement comprise entre 1 et 100 microns.

Méthodes

Le support peut être avantageusement préparé par l'une des méthodes décrites ci-après.

A titre d'exemple, une méthode de préparation d'une silice-alumine faisant partie de l'invention consiste à préparer à partir d'un silicate alcalin hydrosoluble une solution d'acide orthosilicique ($H_2SiO_4$, $H_2O$) décationisée par échange ionique puis à l'ajouter simultanément à un sel cationique d'aluminium en solution par exemple le nitrate et à de l'ammoniaque dans des conditions opératoires contrôlées; ou encore ajouter la solution d'acide orthosilicique au sel cationique d'aluminium en solution et à coprécipiter la solution obtenue obtenue par de l'ammoniaque dans des conditions opératoires contrôlées conduisant à un produit homogène. Cet hydrogel de silice-alumine est mélangé avec de la poudre ou une suspension d'hydrate d'aluminium. Après filtration et lavage, séchage avec mise en forme puis calcination préférentiellement sous air, en four rotatif, à température élevée et pendant un temps suffisant pour favoriser les interactions entre l'alumine et la silice, généralement au moins 2 heures, un support répondant aux caractéristiques de l'invention est obtenu.

Une autre méthode de préparation de silice-alumine selon l'invention consiste à précipiter l'hydrate d'alumine comme ci-avant, à le filtrer et le laver puis à le mélanger avec l'acide orthosilicique aqueux de façon à obtenir une suspension, laquelle est intimement homogénéisée par forte agitation et cisaillement. Une turbine Ultraturrax ou encore une turbine Staro peut être utilisée, ou encore un broyeur colloïdal par exemple, un broyeur colloïdal Staro. La suspension homogène est alors séchée par atomisation comme ci-avant puis calcinée entre 500 et 1200°C pendant au moins 3 heures : un support silice-alumine utilisable dans le procédé selon l'invention est obtenu.

Une autre méthode faisant partie de l'invention consiste à préparer comme ci-avant une solution décationisée d'acide orthosilicique puis à l'ajouter simultanément ou consécutivement à un composé d'alumine, par exemple un hydrate d'aluminium en poudre ou en suspension acidulée. Afin d'augmenter le diamètre des pores du support silice-alumine final, au moins un composé basique peut éventuellement être rajouté au milieu réactionnel. Après une homogénéisation poussée de la suspension par agitation, ajustement éventuel par filtration de la teneur en matière sèche puis éventuellement ré-homogénéisation, le produit est séché avec mise en forme simultanément ou consécutivement, puis calciné comme ci-avant.

Une autre méthode faisant également partie de l'invention consiste à préparer une suspension ou une dispersion aqueuse d'alumine, par exemple un monohydrate d'aluminium puis à l'ajouter simultanément ou consécutivement à un composé de silice, par exemple un silicate de sodium. Afin d'augmenter le diamètre des pores du support silice alumine final, au moins un composé basique peut éventuellement être rajouté au milieu réactionnel. Le support est obtenu par filtration et lavage, éventuellement lavage par une solution ammoniacale pour extraire par échange ionique le sodium résiduel, séchage avec mise en forme simultanément ou consécutivement. Après séchage avec mise en forme puis calcination comme ci-avant, un support répondant aux caractéristiques de l'invention est obtenu. La taille des particules d'alumine utilisée est de préférence comprise entre 1 et 100 microns pour obtenir une bonne homogénéisation du support silice-alumine selon l'invention.

Pour augmenter le diamètre des mésopores du support silice-alumine, il peut être particulièrement avantageux comme nous l'enseigne le brevet américain US 4 066 574 de préparer une suspension ou une dispersion aqueuse d'alumine, par exemple un monohydrate d'aluminium puis de neutraliser par une solution basique, par exemple de l'ammoniaque, puis à l'ajouter simultanément ou consécutivement à un composé de silice par exemple une solution décationisée d'acide orthosilicique. Après une homogénéisation poussée de la suspension par agitation intense, ajustement éventuel par filtration de la teneur en matière sèche puis ré-homogénéisation, le produit est séché avec mise en forme simultanément ou consécutivement, puis calciné comme ci-avant. Cette méthode fait également partie des méthodes utilisées selon l'invention.

Dans l'exposé des méthodes précitées, on emploie homogénéisation pour décrire la remise en solution d'un produit contenant une fraction solide par exemple une suspension, une poudre, un précipité filtré, puis sa dispersion sous agitation intense. L'homogénéisation d'une dispersion est un procédé bien connu de l'homme du métier. La dite-homogénéisation peut être réalisée par tout procédé connu de l'homme de l'art: à titre d'exemple dans un réacteur en batch, un mélangeur en continu, un malaxeur. Un tel mélange peut être réalisé dans un réacteur à écoulement piston et, notamment dans un réacteur statique. On peut citer les réacteurs Lightnin. Une turbine Ultraturrax® ou encore une turbine Staro® peut être utilisée, ou encore un broyeur colloïdal par exemple, un broyeur colloïdal Staro. Les broyeurs colloïdaux commerciaux IKA® peuvent être aussi utilisés.

Dans l'ensemble des méthodes précitées, il peut être éventuellement souhaitable d'ajouter, lors d'une étape quelconque de la préparation, une proportion mineure d'au moins un élément stabilisant choisi dans le groupe formé par la zircone et le titane. L'élément stabilisant est de préférence ajouté sous forme d'un sel soluble.

Mise en forme des supports et catalyseurs

Le support peut être obtenu par mise en forme de la silice-alumine par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La mise en forme peut également être réalisée en présence des différents constituants du catalyseur et extension de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2.5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports mis en oeuvre selon la présente invention peuvent avoir été traités ainsi qu'il est bien connu de l'homme de l'art par des additifs pour faciliter la mise en forme et/ou améliorer les propriétés mécaniques finales des supports silico-aluminiques. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents flocculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristique des supports de l'invention est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage. ,

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%.

La teneur en acide ajouté au malaxage avant la mise en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

Calcination du support

Le séchage est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une des quelconque étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisé sous pression partielle d'ammoniaque.

Traitements post-synthèse

Des traitements post-synthèse peuvent être effectués, de manière à améliorer les propriétés du support, notamment son homogénéité telle que définie précédemment.

Selon l'invention, le support peut ainsi être éventuellement soumis à un traitement hydrothermal en atmosphère confinée. On entend par traitement hydrothermal en atmosphère un traitement par passage à l'autoclave en présence d'eau sous une température supérieure à la température ambiante.

Au cours de ce traitement hydrothermal, on peut traiter de différentes manières la silice-alumine mise en forme. Ainsi, on peut imprégner la silice alumine d'acide, préalablement à son passage à l'autoclave, l'autoclavage de la silice-alumine étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de la silice-alumine dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande brevet EP-A-0 387 109.

La température, pendant l'autoclavage peut être comprise entre 100 et 250°C pendant une période de temps comprise entre 30 minutés et 3 heures.

Modes de réalisation de l'invention

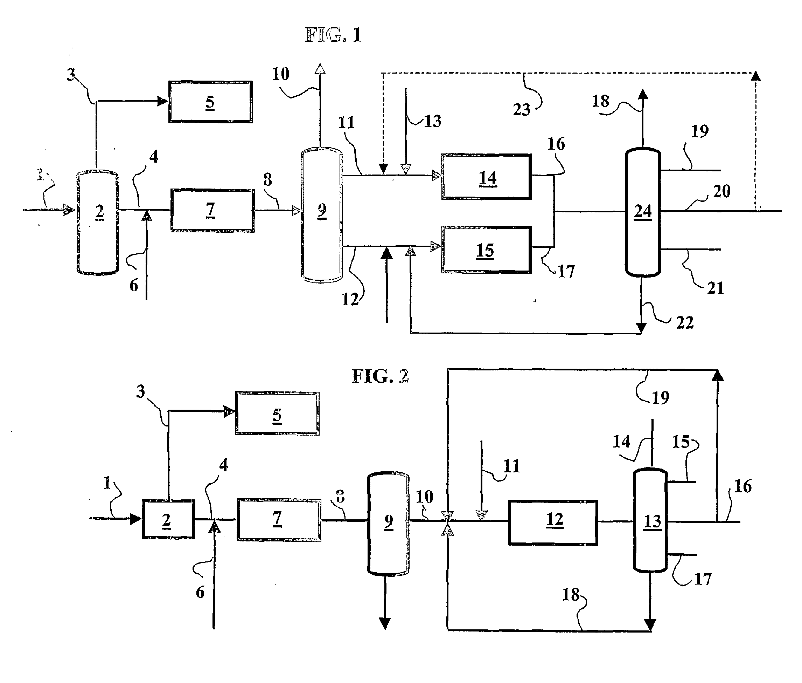

L'invention est ci-après décrite dans des modes préférés de réalisation et à partir des figures 1 à6. Un mode de réalisation de l'invention comprend les étapes suivantes:

a) séparation d'une seule fraction dite lourde à point d'ébullition initial compris entre 120-200°C,
b) hydrotraitement d'une partie au moins de ladite fraction lourde,
c) fractionnement en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

d) passage d'une partie au moins de ladite fraction intermédiaire dans un procédé selon l'invention sur un catalyseur non zéolitique d'hydroisomérisation/ hydrocraquage,
e) passage dans un procédé selon l'invention sur un catalyseur non zéolitique d'hydroisomérisation /hydrocraquage d'une partie au moins de ladite fraction lourde,
f) distillation des fractions hydrocraquées / hydroisomérisées pour obtenir des distillats moyens, et recyclage de la fraction résiduelle bouillant au-dessus desdits distillats moyens dans l'étape (e) sur le catalyseur traitant la fraction lourde.

La description de ce mode de réalisation sera faite en se référant à la figure 1 sans que la figure 1 limite l'interprétation.

Etape (a)

L'effluent issu de l'unité de synthèse Fischer-Tropsch arrivant par la conduite 1 est fractionné (par exemple par distillation) dans un moyen de séparation (2) en au moins deux fractions: au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement, peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

Etape (b)

Cette fraction est admise en présence d'hydrogène (conduite 6) dans une zone (7) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments. Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs. Dans le réacteur d'hydrotraitement (7), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprise entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% poids, de préférence est inférieure à 20% et de façon encore plus préférée est inférieure à 10%.

Etape (c):

L'effluent issu du réacteur d'hydrotraitement est amené par une conduite (8) dans une zone de fractionnement (9) où il est fractionné en au moins trois fractions.

- au moins une fraction légère (sortant par la conduite 10) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C. -
- au moins une fraction intermédiaire (conduite 11) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 12) comportant les composés ayant des points d'ébullition supérieurs au point de coupe T2 précédemment défini.

Le fractionnement est obtenu ici par distillation, mais il peut être réalisé en une ou plusieurs étapes et par d'autres moyens que la distillation.

Ce fractionnement peut être réalisé par des méthodes bien connues de l'homme du métier telles que le flash, la distillation etc...

Les fractions intermédiaires et lourdes précédemment décrites sont traitées selon le procédé de l'invention.

Etape (d)

Une partie au moins de ladite fraction intermédiaire est alors introduite (conduite 11), ainsi qu'éventuellement un flux d'hydrogène, (conduite 13) dans la zone (14) contenant le catalyseur d'hydroisomérisation / d'hydrocraquage du procédé selon la présente invention.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 h$^{-1}$ et 10 h$^{-1}$ et de préférence entre 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage.

Etape (e)

Une partie au moins de ladite fraction lourde est introduite via la ligne (12) dans une zone (15) où elle est mise, en présence d'hydrogène (25), au contact d'un catalyseur d'hydroisomérisation/hydrocraquage selon le procédé de la présente invention afin de produire une coupe distillat moyen (kérosène + gazole) présentant de bonnes propriétés à froid.

Le catalyseur utilisé dans la zone (15) de l'étape (e) pour réaliser les réactions d'hydrocraquage et d'hydroisomérisation de la fraction lourde, définie selon l'invention, est du même type que celui présent dans le réacteur (14). Cependant, il est à noter que les catalyseurs mis en oeuvre dans les réacteurs (14) et (15) peuvent être identiques ou différents.

Durant cette étape (e) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids.

Etape (f)

Les effluents en sortie des réacteurs (14) et (15) sont envoyés par les conduites (16) et (17) dans un train de distillation, qui intègre une distillation atmosphérique et éventuellement une distillation sous vide, et qui a pour but de séparer d'une part les produits légers inévitablement formés lors des étapes (d) et (e) par exemple les gaz ($C_1$-$C_4$) (conduite 18) et une coupe essence (conduite 19), et de distiller au moins une coupe gazole (conduite 21) et kérosène (conduite 20). Les fractions gazole et kérosène peuvent être recyclées (conduite 23) en partie, conjointement ou de façon séparée, en tête du réacteur (14) d'hydroisomérisation /hydrocraquage étape (d).

Il est également distillé une fraction (conduite 22) bouillant au-dessus du gazole, c'est à dire dont les composés qui la constituent ont des points d'ébullition supérieurs à ceux des distillats moyens (kérosène + gasole). Cette fraction, dite fraction résiduelle, présente généralement un point d'ébullition initial d'au moins 350°C, de préférence supérieure à 370°C. Cette fraction est avantageusement recyclée en tête du réacteur (15) via la conduite (26) d'hydroisomérisation /hydrocraquage: de la fraction lourde (étape e).

Il peut être également avantageux de recycler une partie du kérosène et/ou du gazole dans l'étape (d), l'étape (e) ou les deux. De façon préférée, l'une au moins des fractions kérosène et/ou gazole est recyclée en partie dans l'étape (d) (zone 14). On a pu constater qu'il est avantageux de recycler une partie du kérosène pour améliorer ses propriétés à froid.

Avantageusement et dans le même temps, la fraction non hydrocraquée est recyclée en partie dans l'étape (e) (zone 15).

Il va sans dire que les coupes gazole et kérosène sont de préférence récupérées séparément, mais les points de coupe sont ajustés par l'exploitant en fonction de ses besoins.

Sur la figure 1, on a représenté une colonne (24) de distillation, mais deux colonnes peuvent être utilisées pour traiter séparément les coupes issues de zones (14) et (15).

Sur la figure 1, on a représenté seulement le recyclage du kérosène sur le catalyseur du réacteur (14). Il va sans dire qu'on peut aussi bien recycler une partie du gazole (séparément ou avec le kérosène) et de préférence sur le même catalyseur que le kérosène.

Un autre mode de réalisation de l'invention comprend les étapes suivantes :

a) séparation d'au moins une fraction légère de la charge de façon à obtenir une seule fraction dite lourde à point d'ébullition initial compris entre 120-200°C,
b) éventuel hydrotraitement de ladite fraction lourde, éventuellement suivi d'une étape
c) d'enlèvement d'au moins une partie de l'eau,

d) passage dans un procédé selon l'invention d'une partie au moins de ladite fraction éventuellement hydrotraitée, la conversion sur le catalyseur d'hydroisomérisation/hydrocraquage des produits à points d'ébullition supérieurs ou égaux à 370°C en produits à points d'ébullition inférieures à 370°C est supérieure à 80% pds,

e) distillation de la fraction hydrocraquée/hydroisomérisée pour obtenir des distillats moyens, et recyclage dans l'étape d) de la fraction résiduelle bouillant au-dessus desdits distillats moyens.

La description de ce mode de réalisation sera faite en se référant à la figure 2 sans que la figure 2 limite l'interprétation.

Etape (a)

L'effluent issu de l'unité de synthèse Fischer-Tropseh arrivant par la conduite. 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc...

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention:

Etape (b)

Eventuellement, cette fraction est admise en présence d'hydrogène (conduite 6) dans une zone (7) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (7), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

Etape (c)

L'effluent (conduite 8) issu du réacteur (7) d'hydrotraitement est éventuellement introduit dans une zone (9) d'enlèvement d'eau qui a pour but d'éliminer au moins en partie l'eau produite lors des réactions d'hydrotraitement. Cette élimination d'eau peut s'effectuer avec ou sans élimination de la fraction gazeuse $C_4$ moins qui est généralement produite lors de l'étape d'hydrotraitement. On entend par élimination de l'eau, l'élimination de l'eau produite par les réactions d'hydrodeoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation...

Etape (d)

La fraction lourde (éventuellement hydrotraitée) ainsi séchée est alors introduite (conduite 10) ainsi qu'éventuellement un flux d'hydrogène (conduite 11), dans la zone (12) contenant le catalyseur d'hydroisomérisation / hydrocraquage. Une autre éventualité du procédé aussi selon l'invention consiste à envoyer la totalité de l'effluent sortant du réacteur d'hydrotraitement (sans séchage) dans le réacteur contenant le catalyseur d'hydroisomérisation / hydrocraquage et de préférence en même temps qu'un flux d'hydrogène.

Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000 litres hydrogène/ litre catalyseur. Notons également que toute méthode de réduction ex-situ est convenable.

Les conditions opératoires dans lesquelles est effectuée cette étape (d) sont :

La pression est maintenue entre 2. et 150 bars et de préférence entre 5 et 100 bars et avantageusement de 10 à 90 bars, la vitesse spatiale est comprise entre 0,1 h$^{-1}$ et 10 h$^{-1}$ et de préférence entre. 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'étape d'hydroisomérisation et d'hydrocraquage est conduite dans des conditions telles que la conversion par passe en produits à points d'ébullition supérieurs ou égaux à 370°C en des produits ayant des points d'ébullition inférieurs à 370°C est supérieure à 80% poids, et de façon encore plus préférée d'au moins 85%, de préférence supérieure à 88%, de manière à obtenir des distillats moyens (gazole et kérosène) ayant des propriétés à froid suffisamment bonnes (point d'écoulement, point de congélation) pour satisfaire aux spécifications en vigueur pour ce type de carburant.

Les deux étapes, hydrotraitement et hydroisomérisation-hydrocraquage, peuvent être réalisées sur les deux types de catalyseurs dans deux ou plusieurs réacteurs différents, ou/et dans un même réacteur.

Etape (e)

L'effluent (fraction dite hydrocraquée / hydroisomérisée) en sortie du réacteur (12), étape (d), est envoyé dans un train de distillation (13), qui intègre une distillation atmosphérique et éventuellement une distillation sous vide, qui a pour but de séparer les produits de conversion de point d'ébullition inférieur à 340°C et de préférence inférieur à 370°C et incluant notamment ceux formés lors de l'étape (d) dans le réacteur (12), et de séparer la fraction résiduelle dont le point initial d'ébullition est généralement supérieur à au moins 340°C et de préférence supérieur ou égal à au moins 370°C. Parmi les produits de conversion et hydroisomérisés, il est séparé outre les gaz légers C1-C4 (conduite 14) au moins une fraction essence (conduite 15), et au moins une fraction distillat moyen kérosène (conduite 16) et gazole (conduite 17). La fraction résiduelle dont le point initial d'ébullition est généralement supérieur à au moins 340°C et de préférence supérieur ou égal à au moins 370°C est recyclée (conduite 18) en tête du réacteur (12) d'hydroisomérisation et d'hydrocraquage.

Il peut être également avantageux de recycler (conduite 19) dans l'étape (d) (réacteur 12) une partie du kérosène et/ou du gazole ainsi obtenus.

Un autre mode de réalisation de l'invention comprend les étapes suivantes:

a) Fractionnement (étape a) de la charge en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

b) Hydrotraitement (étape b) d'au moins une partie de ladite fraction intermédiaire, puis passage (étape d) dans un procédé de traitement d'au moins une partie de la fraction hydrotraitée sur un catalyseur d'hydrocraquage/hydroisomérisation.

f) Passage (étape f) dans un procédé de traitement d'une partie au moins de ladite fraction lourde sur un catalyseur d'hydrocraquage/hydroisomérisation avec une conversion des produits 370°C$^+$ en produits 370°C moins supérieure à 80% poids.

e) et g) Distillation (étapes e et g) d'au moins une partie des fractions hydrocraquées /hydroisomérisées pour obtenir des distillats moyens.

et l'un au moins desdits procédés de traitement des étapes d) et f) est le procédé de l'invention.

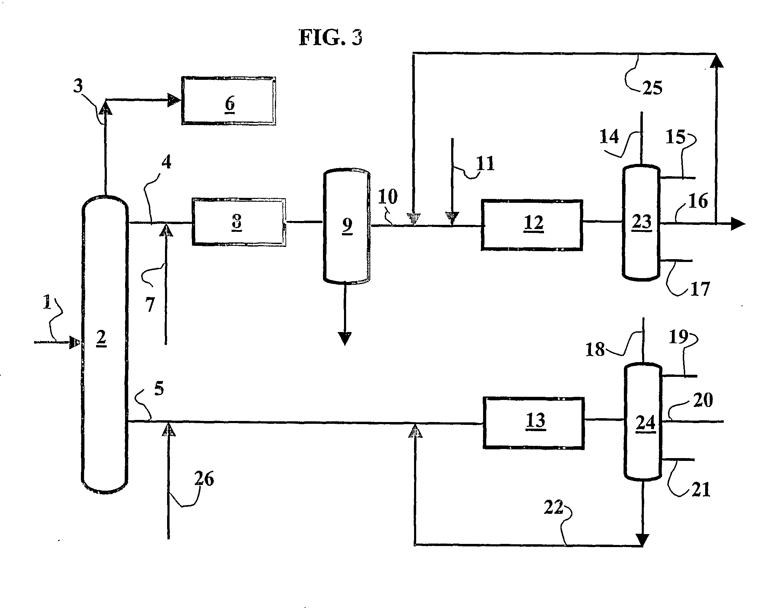

La description de ce mode de réalisation sera faite en se référant à la figure 3 sans que la figure 3 limite l'interprétation.

Etape (a)

L'effluent issu de l'unité de synthèse Fischer-Tropsch arrivant par la conduite (1) est fractionné dans un zone de fractionnement (2) en au moins trois fractions :

- au moins une fraction légère (sortant par la conduite 3) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 4) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 5) comportant les composés ayant des points d'ébullition supérieurs au point de coupe T2 précédemment défini.

Une coupe entre un point d'ébullition T1 comprise entre 120 - 200°C et T2 supérieure à 300°C et inférieure à 370°C est préférée. La coupe à 370°C est encore plus préférée c'est à dire la fraction lourde est une coupe 370°C.

Le fait de couper à 370°C permet de séparer au moins 90% pds des oxygénés et des oléfines, et le plus souvent au moins 95% pds. La coupe lourde à traiter est alors purifiée et une élimination des hétéroatomes ou insaturés par hydrotraitement n'est alors pas nécessaire.

Le fractionnement est obtenu ici par distillation, mais il peut être réalisé en une ou plusieurs étapes et par d'autres moyens que la distillation.

Ce fractionnement peut être réalisé par des méthodes bien connues de l'homme du métier telles que le flash, la distillation etc...

La fraction légère n'est pas traitée selon le procédé de l'invention mais peut par exemple constituer une bonne charge pour une unité pétrochimique et plus particulièrement pour un vapocraqueur (installation 6 de vapocraquage).

Les fractions plus lourdes précédemment décrites sont traitées selon le procédé de l'invention.

Etape (b)

Ladite fraction intermédiaire est admise via la ligne (4), en présence d'hydrogène amené par la tubulure (7), dans une zone d'hydrotraitement (8) contenant un catalyseur d'hydrotraitement. L'objectif de cet hydrotraitement est de réduire la teneur en composés oléfiniques et insaturés ainsi que d'hydrotraiter les composés oxygénés (alcools) présents.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (8), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 200ONWh et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

Etape (c)

L'effluent issu du réacteur d'hydrotraitement est éventuellement introduit dans une zone (9) d'enlèvement d'eau qui a pour but, d'éliminer au moins une partie de l'eau produite lors des réactions d'hydrotraitement. Cette élimination d'eau peut s'effectuer avec ou sans élimination de la fraction gazeuse $C_4$ moins qui est généralement produite lors de l'étape d'hydrotraitement. On entend par élimination de l'eau, l'élimination de l'eau produite par les réactions d'hydrodeoxygénation (HDO) des alcools, mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

Etape (d)

La fraction ainsi éventuellement séchée est alors introduite (conduite 10), ainsi qu'éventuellement un flux d'hydrogène, (conduite 11) dans la zone (12) contenant le catalyseur d'hydroisomérisation / d'hydrocraquage. Une autre éventualité du procédé aussi selon l'invention consiste à envoyer la totalité de l'effluent sortant du réacteur d'hydrotraitement (sans séchage) dans le réacteur contenant le catalyseur d'hydroisomérisation / d'hydrocraquage et de préférence en même temps qu'un flux d'hydrogène.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 $h^{-1}$ et 10 $h^{-1}$ et de préférence entre 0,2 et 7$h^{-1}$ est avantageusement entre 0,5 et 5,0$h^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C. à 450°C avantageusement de 300 à 450°C, et encore plus avantageusement supérieure à 320°C ou par exemple entre 320-420°C.

Les deux étapes, hydrotraitement et hydroisomérisation-hydrocraquage, peuvent être réalisées sur les deux types de catalyseurs dans deux ou plusieurs réacteurs différents, ou/et dans un même réacteur.

L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage.

Etape (f)

Ladite fraction lourde dont les points d'ébullition sont supérieurs au point de coupe T2, précédemment défini, est introduite via la ligne (5) dans une zone (13) où elle est mise, en présence d'hydrogène (26), au contact d'un catalyseur non zéolitique d'hydroisomérisation/hydrocraquage afin de produire une coupe distillat moyen (kérosène + gazole) présentant de bonnes propriétés à froid.

Le catalyseur utilisé dans la zone (13) de l'étape (f) pour réaliser les réactions d'hydrocraquage et d'hdydroisomérisation de la fraction lourde, définie selon l'invention, est du même type que celui présent dans le réacteur (12). Cependant, il est à noter que les catalyseurs mis en oeuvre dans les réacteurs (12) et (13) peuvent être identiques ou différents.

Durant cette étape (f) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids. Dans cette étape (f), on cherchera donc à favoriser l'hydrocraquage, mais de préférence en limitant le craquage du gazole.

Etape (g)

L'effluent en sortie du réacteur (12), étape (d) est envoyé dans un train de distillation, qui intègre une distillation atmosphérique et éventuellement une distillation sous vide, et qui a pour but de séparer d'une part les produits légers inévitablement formés lors de l'étape (d) par exemple les gaz ($C_1$-$C_4$) (conduite 14) et une coupe essence (conduite 19), et de distiller au moins une coupe gazole (conduite 17) et kérosène (conduite 16). Les fractions gazole et kérosène peuvent être recyclées (conduite- 25) en partie, conjointement ou de façon séparée, en tête du réacteur (12) d'hydroisomérisation /hydrocraquage étape (d).

L'effluent en sortie de l'étape (f), est soumis à une étape de séparation dans un train de distillation de manière à séparer d'une part les produits légers inévitablement formés lors de l'étape (f) par exemple les gaz ($C_1$-$C_4$) (conduite 18) et une coupe essence (conduite 19), à distiller une coupe gazole (conduite 21) et kérosène (conduite 20) et à distiller la fraction (conduite 22) bouillant au-dessus de gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction non hydrocraquée est avantageusement recyclée en tête du réacteur (conduite 13) d'hydroisomérisation /hydrocraquage étape (f).

Il peut être également avantageux de recycler une partie du kérosène et/ou du gazole dans l'étape (d), l'étape (f) ou les deux. De façon préférée, l'une au moins des fractions kérosène et/ou gazole est recyclée en partie (conduite 25) dans l'étape (d) (zone 12). On a pu constater qu'il est avantageux de recycler une partie du kérosène pour améliorer ses propriétés à froid.

Avantageusement et dans le même temps, la fraction non hydrocraquée est recyclée en partie dans l'étape (f) (zone 13).

Il va sans dire que les coupes gazole et kérosène sont de préférence récupérées séparément, mais les points de coupe sont ajustés par l'exploitant en fonction de ses besoins.

Sur la figure 3, on a représenté 2 colonnes (23) et (24) de distillation, mais une seule peut être utilisée pour traiter l'ensemble des coupes issues de zones (12) et (13).

Sur la figure 3, on a représenté seulement le recyclage du kérosène sur le catalyseur du réacteur (12). Il va sans dire qu'on peut aussi bien recycler une partie du gazole (séparément ou avec le kérosène) et de préférence sur le même catalyseur que le kérosène. On peut également recycler une partie du kérosène et/ou du gazole produits dans les lignes (20) (21).

Un autre mode de réalisation de l'invention comprend les étapes suivantes :

a) éventuel fractionnement de la charge en au moins une fraction lourde à point d'ébullition initial compris entre 120 et 200°C, et au moins une fraction légère bouillant en-dessous de ladite fraction lourde,
b) éventuel hydrotraitement d'une, partie au moins de la charge ou de la fraction lourde, éventuellement suivi d'une étape c)
c) élimination d'au moins une partie de l'eau,
d) passage d'une partie au moins de l'effluent ou de la fraction éventuellement hydrotraité dans un procédé de traitement sur un premier catalyseur d'hydroisomérisation / hydrocraquage contenant au moins un métal noble du groupe VIII,
e) distillation de l'effluent hydroisomérisé / hydrocraqué pour obtenir dés distillats moyens (kérosène, gasoil) et une fraction résiduelle bouillant au-dessus des distillats moyens,
f) sur un second catalyseur d'hydroisoménsation / hydrocraquage contenant au moins un métal noble du groupe VIII, passage dans un procédé dé traitement d'au moins une partie de ladite fraction lourde résiduelle et/ou d'une partie desdits distillats moyens; et distillation de l'effluent résultant pour obtenir des distillats moyens,

et l'un au moins desdits procédés de traitement de l'étape d) et f) est celui de l'invention.

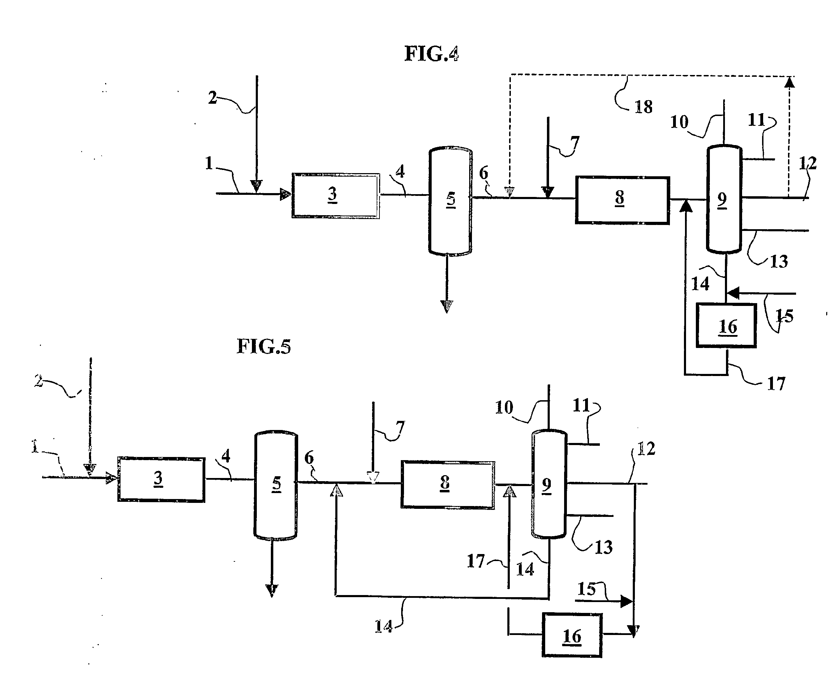

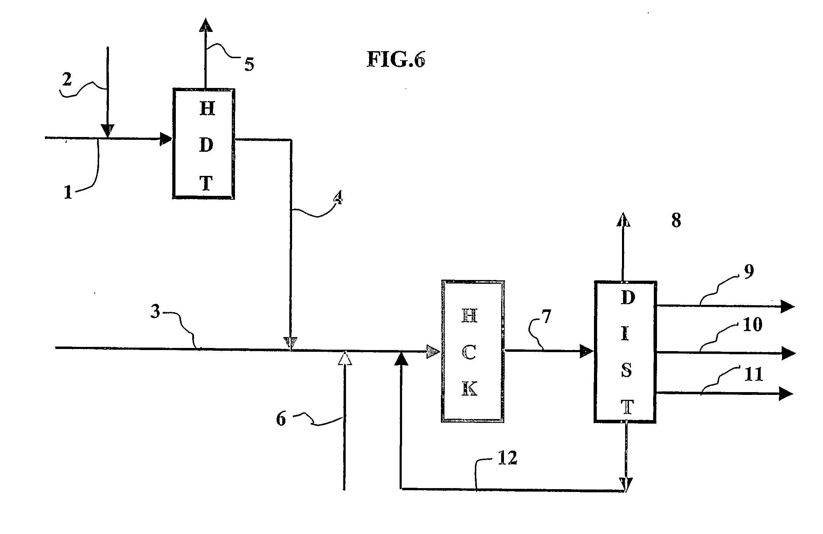

La description de ce mode de réalisation sera faite en se référant aux figures 4 et 5, sans que ces figures limitent l'interprétation.

Etape a)

Lorsque cette étape est mise en oeuvre, l'effluent issu de l'unité de synthèse Fischer-Tropsch est fractionné (par exemple par distillation) en au moins deux fractions : au moins une fraction légère et au moins une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C.

La fraction lourde présente généralement des teneurs en paraffines d'au moins 50% poids.

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité de vapocraquage. Au moins une fraction lourde précédemment décrite est traitée selon le procédé de l'invention.

Etape b)

Eventuellement, cette fraction ou une partie au moins de la charge initiale, est admise via la ligne (1) en présence d'hydrogène (amené par la conduite (2)) dans une zone (3) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support. Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (3), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

Etape c)

L'effluent (conduite 4) issu du réacteur (3) d'hydrotraitement est éventuellement introduit dans une zone (5) d'enlèvement d'eau qui a pour but d'éliminer au moins en partie l'eau produite lors des réactions d'hydrotraitement. Cette élimination d'eau peut s'effectuer avec ou sans élimination de la fraction gazeuse C$_4$ moins qui est généralement produite lors de l'étape d'hydrotraitement. On entend par élimination de l'eau, l'élimination de l'eau produite par les réactions d'hydrodeoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

Etape d)

Une partie au moins et de préférence la totalité de la fraction hydrocarbonée (une partie au moins de la charge ou une partie au moins de la fraction lourde de l'étape a) ou une partie au moins de la fraction ou de la charge hydrotraitée et éventuellement séchée) est alors introduite (conduite 6) ainsi qu'éventuellement un flux d'hydrogène (conduite 7) dans la zone (8) contenant ledit premier catalyseur d'hydroisomérisation / hydrocraquage. Une autre éventualité du procédé aussi selon l'invention consiste à envoyer une partie ou la totalité de l'effluent sortant du réacteur d'hydrotraitement (sans séchage) dans le réacteur contenant le catalyseur d'hydroisomérisation / d'hydrocraquage et de préférence en même temps qu'un flux d'hydrogène.

Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1 °C/min puis un palier de 2 heures à 450°C ; durant toute cette étape de réduction, le débit d'hydrogène est de 1000 litres hydrogène/litre catalyseur. Notons également que toute méthode de réduction ex-situ est convenable.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 $h^{-1}$ et 10 $h^{-1}$ et de préférence entre 0,2 et 7$h^{-1}$ est avantageusement entre 0,5 et 5,0$h^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

Les deux étapes, hydrotraitement et hydroisomérisation-hydrocraquage, peuvent être réalisées sur les deux types de catalyseurs dans deux ou plusieurs réacteurs différents, ou/et dans un même réacteur.

Etape e)

L'effluent hydroisomérisé / hydrocraqué en sortie du réacteur (8), étape (d), est envoyé dans un train de distillation (9) qui intègre une distillation atmosphérique éventuellement une distillation sous vide qui a pour but de séparer les produits de conversion de point d'ébullition inférieur à 340°C et de préférence inférieur à 370°C et incluant notamment ceux formés lors de l'étape (d) dans le réacteur (8), et de séparer la fraction résiduelle dont le point initial d'ébullition est généralement supérieur à au moins 340°C et de préférence supérieur ou égal à au moins 370°C. Parmi les produits de conversion et hydroisomérisés il est séparé, outre les gaz légers C1-C4 (conduite 10) au moins une fraction essence (conduite 11), et au moins une fraction distillat moyen kérosène (conduite 12) et gazole (conduite 13).

Etape f)

Le procédé selon l'invention utilise une seconde zone (16) contenant un catalyseur d'hydroisomérisation / hydrocraquage (dit second catalyseur). Il passe sur ce catalyseur, en présence d'hydrogène (conduite 15) un effluent choisi parmi une partie du kérosène produit (conduite 12), une partie du gazole (conduite 13) et la fraction résiduelle et de préférence, la fraction résiduelle dont le point initial d'ébullition est généralement supérieur à au moins 370°C. Le catalyseur présent dans le réacteur (16) de l'étape (f) du procédé selon l'invention est de la même façon que pour l'étape d), de type acide non zéolitique et à base d'au moins un métal noble du groupe VIII ; cependant il peut être identique ou différent de celui de l'étape d).

Durant cette étape la fraction entrant dans le réacteur (16) subit au contact du catalyseur et en présence d'hydrogène des réactions d'hydroisomérisation et/ou d'hydrocraquage qui vont permettre d'améliorer la qualité des produits formés et plus particulièrement les propriétés à froid du kérosène et du gazole; et d'obtenir des rendements en distillat amélioré par rapport à l'art antérieur.

Le choix des conditions opératoires permet d'ajuster finement la qualité des produits (distillats moyens) et en particulier les propriétés à froid.

Les conditions opératoires dans lesquelles est effectuée cette étape (f) sont :

La pression est maintenue entre 2 et 150 bars et de préférence entre 5 et 100 bars et avantageusement de 10 à 90 bars, la vitesse spatiale est comprise entre 0,1 $h^{-1}$ et 10 $h^{-1}$ et de préférence entre 0,2 et 7$h^{-1}$ est avantageusement entre 0,5 et 5,0$h^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'exploitant ajustera les conditions opératoires sur le premier et second catalyseur d'hydrocraquage/hydroisomérisation de façon à obtenir les qualités de produits et les rendements souhaités.

Ainsi, de façon générale, sur le premier catalyseur, la conversion par passe en produits à points d'ébullition supérieurs ou égaux à 150°C en des produits à points d'ébullition inférieurs à 150°C est inférieure à 50%pds, de préférence inférieure à 30% pds. Ces conditions permettent au particulier d'ajuster le rapport kérosène/gazole produits ainsi que les produits à froid des distillats moyens, et plus particulièrement du kérosène.

Egalement de façon générale, sur le second catalyseur, lorsque la fraction résiduelle est traitée, la conversion par passe en produits à points d'ébullition supérieurs ou égaux à 370°C en produits à points d'ébullition inférieurs à 370°C, est supérieure à 40% pds, de préférence supérieure 50% pds, ou mieux à 60% pds. Il peut même s'avérer avantageux d'avoir des conversions d'au moins 80% pds.

Lorsque une partie du kérosène et/ou du gazole est traitée sur le second catalyseur, la conversion par passe en produits à points d'ébullition supérieurs ou égaux à 150°C en des produits à points d'ébullition inférieurs à 150°C est inférieure à 50% pds, de préférence inférieure à 30% pds.

De façon générale les conditions opérations appliquées dans les réacteurs (8) et (16) peuvent être différentes ou identiques. De façon préférée les conditions opératoires utilisées dans les 2 réacteurs d'hydroisomérisation / hydrocraquage sont choisies différentes en termes de pression opératoire, température, temps de contact (wh) et rapport $H_2$/charge. Ce mode de réalisation permet à l'exploitant d'ajuster les qualités et/ou rendements en kérosène et gazole.

L'effluent issu du réacteur (16) est ensuite envoyé via la ligne (17) dans le train distillation de manière à séparer les produits de conversion, essence, kérosène et gazole.

Sur la figure 4, il est représenté un mode de réalisation avec la fraction résiduelle (conduite 14) passant dans la zone (16) d'hydroisomérisation / hydrocraquage (étape f), l'effluent obtenu étant envoyé (conduite 17) dans la zone (9) de séparation.

Avantageusement, dans le même temps, le kérosène et/ou le gazole peut être en partie recyclé (conduite 18) dans la zone (8) d'hydroisomérisation / hydrocraquage (étape d) sur le premier catalyseur.

Sur la figure 5, une partie du kérosène et/ou du gazole produits passent dans la zone (16) d'hydroisomérisation / hydrocraquage (étape f), l'effluent obtenu étant envoyé (conduite 17) dans la zone (9) de séparation.

Dans le même temps, la fraction résiduelle. (conduite 14) est recyclée dans la zone (8) d'hydroisomérisation / hydrocraquage (étape d) sur le premier catalyseur.

On a pu constater qu'il est avantageux de recycler une partie du kérosène sur un catalyseur d'hydrocraquage /hydroisomérisation pour améliorer ses propriétés à froid.

Sur les figures 4 et 5, on a représenté seulement le recyclage du kérosène. Il va sans dire qu'on peut aussi bien recycler une partie du gazole (séparément ou avec le kérosène) et de préférence sur le même catalyseur que le kérosène.

L'invention peut également être utilisée dans d'autres modes de réalisation pour produire des distillats moyens.

Par exemple, un mode de réalisation inclut l'hydrotraitement d'un effluent issu de la synthèse Fischer-Tropsch en totalité ou après séparation de la fraction C4 moins (de préférence la conversion des produits ayant des points d'ébullition supérieurs à 370°C est inférieure à 20%), une éventuelle séparation de la fraction C4 moins de l'effluent d'hydrotraitement et au moins une partie de l'effluent résiduel est traité par le procédé selon l'invention (la conversion étant de préférence d'au moins 40%).

Dans un autre mode de réalisation, l'effluent issu de la synthèse Fischer-Tropsch est séparé en une fraction lourde (de préférence bouillant au-dessus de 260°C) et au moins une fraction légère (de préférence bouillant en-dessous de 260°C), la fraction lourde est traitée par le procédé selon l'invention, au moins une fraction légère est hydrotraitée puis hydrocraquée/isomérisée de préférence selon le procédé de l'invention.

Dans un autre mode de réalisation de l'invention, le procédé peut être utilisé pour la production de distillats moyens, essentiellement en l'absence de composés organiques oxygénés, à partir d'un mélange synthétique d'hydrocarbures partiellement oxygénés issus du procédé de synthèse Fischer - Trospch, substantiellement linéaires, contenant au moins 20 % en poids d'une fraction ayant une température de distillation supérieure à 370°C. Le procédé comprend alors les étapes suivantes :

a) séparation dudit mélange en au moins une fraction à faible température d'ébullition (B) (généralement avec un point d'ébullition maximum allant de 150 à 380°C, préférentiellement de 260 à 370°C) plus riche en composés oxygénés et au moins une fraction à haute température d'ébullition (A) moins riche en composés oxygénés (généralement avec un point d'ébullition supérieur à 370°C, éventuellement comprenant au moins une partie d'une coupe gazole type) ;

b) soumission de ladite fraction (B) à un traitement hydrogénant dans des conditions de nature à éviter toute variation substantielle dans son poids moléculaire moyen pour obtenir un mélange hydrogéné d'hydrocarbures substantiellement non oxygénés;

c) recombinaison d'au moins une partie dudit mélange hydrogéné selon l'étape (b) avec ladite fraction (A) pour former un mélange (C) d'hydrocarbures linéaires avec un contenu réduit en hydrocarbures oxygénés et soumission dudit mélange (C) à un traitement d'hydrocraquage selon l'invention en présence, d'un catalyseur d'hydroisomérisation/hydrocraquage, pour convertir au moins 40 % de ladite fraction à haut point d'ébullition en une fraction d'hydrocarbures pouvant être distillés à une température inférieure à 370°C;

d) séparation d'au moins une fraction d'hydrocarbures du produit obtenu à l'étape (c) dont la température de distillation est dans le domaine des distillats moyens.

La description de ce mode de réalisation sera faite en se référant à la figure (6), sans que cette figure limite l'interprétation.

Un flux synthétique d'hydrocarbures substantiellement linéaires, partiellement oxygénés ou essentiellement exempts de soufre obtenus par un procédé de type Fischer-Tropsch, de préférence de type "non-shifting" est ôté du réacteur de synthèse préalablement subdivisé en une fraction bouillant à haut point d'ébullition (A), avec un point d'ébullition initial allant de 250°C à 450°C, et une fraction à bas point d'ébullition. (B), avec un point d'ébullition final allant de 200°C à 450°C. Le rapport massique (B)/(A) entre les deux fractions est de manière préférée compris entre 0,5 et 2,0, de manière plus préférée entre 0,8 et 1,5 et si nécessaire, la composition des deux fractions peut partiellement coïncider, avec une coupe d'hydrocarbures présente dans les deux fractions, préférentiellement en quantité allant de 0,1 à 20% en poids par rapport au poids total de chaque fraction.

La fraction à bas point d'ébullition (B) est chargée, par une ligne 1 dans l'unité d'hydrogénation (HDT) pour effectuer l'étape (b) du présent mode de réalisation, dans laquelle il est mis en contact avec de l'hydrogène (ligne 2) en présence d'un catalyseur adéquat, dans des conditions de nature à minimiser ou exclure la réaction d'hydrocraquage.

Une fraction d'hydrocarbures produite dans l'étape d'hydrogénation ayant un contenu en oxygène inférieur à 0,001% poids (dont la fraction d'hydrocarbures gazeux C5-) est avantageusement séparée et enlevée, par l'intermédiaire de la ligne 5. Cette fraction ne représente cependant pas plus de 5%, de préférence pas plus de 3% en poids de la fraction totale (B).

Une fraction à bas point d'ébullition est ainsi obtenue, essentiellement constituée d'un mélange d'hydrocarbures saturés, de préférence partiellement isomérisés, qui est au moins en partie, de préférence complètement ajoutée par l'intermédiaire de la ligne 4 à la fraction (A) (ligne 3) d'hydrocarbures à haut point d'ébullition à faible contenu en oxygène pour former une charge (C) qui alimente une unité d'hydrocraquage (HCK) selon l'étape (c) du présent mode de réalisation de l'invention.

Les flux suivants sont introduits dans l'unité d'hydrocraquage (HCK) :

- la charge (C), obtenue par l'adjonction de la fraction (A) et de la fraction résultant du prétraitement d'hydrogénation de la fraction (B), par l'intermédiaire de la ligne 4;
- la fraction à haut point d'ébullition recyclée par la ligne 12, ayant de préférence un point d'ébullition supérieur à 360°C, formant le résidu de la séparation du distillat moyen, dans un rapport de masse compris préférentiellement entre-1 et 40%, de manière plus préférée entre 5 et 15% par rapport à ladite charge (C);
- une quantité suffisante d'hydrogène par l'intermédiaire de la ligne 6.

Le produit de l'étape d'hydrocraquage, composé d'un mélange d'hydrocarbures ayant un degré d'isomérisation (hydrocarbures non-linéaires / masse du mélange) de préférence supérieur à 50%, de manière plus préférée supérieur à 70% est introduit par l'intermédiaire de la ligne 7 dans une étape de séparation par distillation (DIST), de préférence dans une colonne opérant à pression atmosphérique ou légèrement au-dessus, dont les distillats visés sont retirés par l'intermédiaire des lignes 10 (kérosène) et 11 (gazole). Dans la figure 6, les produits suivants sont aussi obtenus dans l'unité de distillation : une fraction gazeuse C1-C5, relativement insignifiante, par l'intermédiaire de la ligne 8, et une fraction d'hydrocarbures légers, par l'intermédiaire de la ligne 9, de préférence avec un point d'ébullition inférieur à 150°C (naphta) qui est formé à l'étape (c).

Les produits obtenus

Le(s) gazole(s) obtenu (s) présente(nt) un point d'écoulement d'au plus 0°C, généralement inférieur à -10°C et souvent inférieur à -15°C. L'indice de cétane est supérieur à 60, généralement supérieur à 65, souvent supérieur à 70.

Le(s) kérosène(s) obtenu(s) présente(nt) un point de congélation d'au plus -35°C, généralement inférieur à -40°C. Le point de fumée est supérieur à 25 mm, généralement supérieur à 30 mm. Dans ce procédé, la production d'essence (non recherchée) est la plus faible possible. Le rendement en essence sera toujours inférieur à 50% poids, de préférence inférieur à 40% poids, avantageusement inférieur à 30% poids ou encore à 20% pds ou même à 15% poids.

Exemple 1 : Préparation et mise en forme d'une silice-alumine utilisable dans le procédé conformé à l'invention (SiAl-1)

La poudre d'hydroxyde d'aluminium a été préparée selon le procédé décrit dans le brevet WO 00/01617. Cette poudre est mélangée à un sol de silice préparé par échange sur résine décationisante, puis filtré. La composition du support mixte en produit anhydre est, à ce stade, de 70% $Al_2O_3$-30% $SiO_2$. La mise en forme est réalisée en présence de 12 % acide nitrique par rapport au produit anhydre. Le malaxage se fait sur un malaxeur bras en Z. L'extrusion est réalisée par passage de la pâte au travers d'une filière muni d'orifices de diamètre 1,4 mm. Les extrudés de support SiAl-1 ainsi obtenus sont séchés à 150°C puis calcinés à 550°C puis à 750°C en présence de vapeur d'eau.

Les caractéristiques du support sont les suivantes:

La composition du support est 70% $Al_2O_3$-30% $SiO_2$

La surface BET est de 242 m²/g.

Le volume poreux total, mesuré par adsorption d'azote, est de 0,45 ml/g

Le diamètre poreux moyen, mesuré par porosimétrie au mercure, est de 67 Å.

Le rapport entre le volume V2, mesuré par porosimétrie au mercure, compris entre le $D_{moyen}$ 30 Å et le $D_{moyen}$ + 30 Å sur le volume mercure total est de 0,9.

Le volume V3, mesuré par porosimétrie au mercure, compris dans les pores de diamètres supérieurs à $D_{moyen}$ + 30 Å est de 0,023 ml/g.

Le volume V6, mesuré par porosimétrie au mercure, compris dans les pores de diamètres supérieurs à $D_{moyen}$ + 15 Å est de 0,029 ml/g,

Le rapport entre la surface adsorption et la surface BET est de 0,83.

Le volume poreux, mesuré par porosimétrie au mercure; compris dans les pores de diamètre supérieurs à 140 Å est de 0,013 ml/g,

Le volume poreux, mesuré par porosimétrie au mercure, compris dans les pores de diamètre supérieurs à 160 Å est de 0,011 ml/g,

Le volume poreux, mesuré par porosimétrie au mercure, compris dans les pores de diamètre supérieurs à 200 Å est de 0,062 ml/g,

Le volume poreux, mesuré par porosimétrie au mercure, est compris dans les pores de diamètre supérieurs à 500 Å est de 0,001 ml/g,

Le diagramme de diffraction X contient au moins les raies principales caractéristiques gamma et il contient les pics à un d compris entre 1,39 à 1,40 Å et à un d compris entre 1,97 Å à 2 Å.

Le rapport B/L du support est de 0,12.

La densité de remplissage tassée du catalyseur est de 1.08 g/cm³.

La teneur en sodium atomique est de 200 +/- 20 ppm. La teneur en soufre atomique est de 800 ppm. Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{IV}$ octaédriques est de 70%.

Le catalyseur contient deux zones silico-aluminiques, les dites zones ayant des rapports Si/Al inférieurs ou supérieurs au rapport Si/Al global déterminé par fluorescence X. L'une des zones a un rapport. Si/Al déterminé par MET de 0.22 et l'autre zone a un rapport Si/Al déterminé par MET de 5.8.

Exemple 2 : Préparation et mise en forme d'une silice-alumine utilisable dans le procédé conforme à l'invention (SiAl-2)

La silice-alumine SiAl-2 conforme à l'invention est préparée à partir d'une silice-alumine totalement soluble obtenue par toute technique connue de l'homme du métier, à laquelle on ajoute une solution de silicate de sodium. La façon d'opérer est la suivante : dans un premier temps une solution d'acide sulfurique 30% est ajoutée à une solution de silicate de sodium. La quantité d'$H_2SO_4$ est définie de manière à travailler à un taux de neutralisation fixé. L'addition se fait en deux minutes sous une agitation de 600 tours/minutes. La température de synthèse est de 60°C. La durée de mûrissement a été fixée à 30 minutes. L'agitation est maintenue à 600 tours/minutes, la température est celle de l'étape précédente. Puis, on ajoute $Al_2(SO_4)_3$ (500 ml), la concentration est fixée par la teneur en alumine désirée. Le pH n'est pas régulé et est fixé par la teneur en alumine désirée. L'ajout se fait en 10 minutes. L'agitation est toujours fixée à 600 tours/minute, la température est la même que celle des étapes précédentes. Puis, on ajoute l'ammoniaque. Le gel obtenu est filtré par déplacement. Le lavage se fait à l'eau à 60°C, 3 kg d'eau par kg de solide contenu dans le gel. Puis un échange au nitrate d'ammonium $NH_4NO_3$(138,5 g/l) à 60°C et 1,5 l par kg de solide contenu dans le gel est effectué. Enfin, un lavage supplémentaire à l'eau à 60°C est fait par déplacement, 3 kg d'eau par kg de solide contenu dans le gel. Le gel issu de cette étape est mélangé avec de la poudre de boehmite Pural de façon à ce que la composition finale du support mixte en produit anhydre soit, à ce stade de la synthèse, égale à 50% $Al_2O_3$-50% $SiO_2$. Le malaxage se fait sur un malaxeur bras en Z. L'extrusion est réalisée par passage de la pâte au travers d'une filière munie d'orifices de diamètre 1,4 mm. Les extrudés de silice-alumine (SiAl-2) ainsi obtenus sont séchés à 150°C, calcinés à 550°C, puis calcinés à 700°C en présence de vapeur d'eau.

Les caractéristiques du support sont les suivantes :

La composition du support est 50,12 % $Al_2O_3$- 49,88 % $SiO_2$.

La surface BET est de 254 m²/g.

Le volume poreux total, mesuré par adsorption d'azote, est de 0,43 ml/g.

Le diamètre poreux moyen, mesuré par porosimétrie au mercure, est de 65 Å.

Le rapport entre le volume V2, mesuré par porosimétrie au mercure, compris entre le $D_{moyen}$ - 30 Å et le $D_{moyen}$ + 30 Å sur le volume mercure total est de 0,91.

Le volume V3, mesuré par porosimétrie au mercure, compris dans les pores de diamètres supérieurs à $D_{moyen}$ + 30 Å est de 0,03 ml/g.

Le volume V6, mesuré par porosimétrie au mercure, compris dans les pores de diamètres supérieurs à $D_{moyen}$ + 15 Å est de 0,047 ml/g,

Le rapport entré la surface adsorption et la surface BET est de 0,76.

Le volume poreux, mesuré par porosimétrie au mercure, compris dans les pores de diamètre supérieur à 140 Å est de 0,015 ml/g,

Le volume poreux, mesuré par porosimétrie au mercure, compris dans les pores de diamètre supérieurs à 160 Å est de 0,013 ml/g,

Le volume poreux, mesuré par porosimétrie au mercure, compris dans les pores de diamètre supérieurs à 200 Å est 0,011 ml/g,

Le volume poreux, mesuré par porosimétrie au mercure, est compris dans les pores de diamètre supérieurs à 500 Å est de 0,001 ml/g,

Le diagramme de diffraction X contient les raies principales caractéristiques de l'alumine gamma notamment il contient les pics à un d compris entre 1,39 à 1,40 Å et à un d compris entre 1,97 Å à 2,00 Å

Le rapport B/L du support est de 0,12.

La densité de remplissage tassée du catalyseur est de 1.05 g/cm$^3$.

La teneur en sodium atomique est de 310 +/- 20 ppm. La teneur en soufre atomique est de 1600 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm et qui s'étend entre 20 et 100 ppm. Ce massif peut être décomposé en au moins deux espèces. L'espèce prédominante de ce massif correspondraient aux atomes d'$Al_{IV}$ (tétraédrique). La proportion des $Al_{VI}$ octaédriques est de 67%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,25 et l'autre zone a un rapport Si/Al déterminé par MET de 5,8.

Exemple 3: Préparation d'une silice-alumine utilisable dans le procédé conforme à l'invention (SIAl-3)

Le support SiAl-3 est préparé à partir du support SiAl-2 sous formes d'extrudés séchés et calcinés par imprégnation de TEOS (tétraéthoxysilane) selon la méthode décrite par B.Beguin, E.Garbowski, M.Primet dans "Journal of Catalysis", page 595, volume 127, 1991. Puis, les extrudés imprégnés sont séchés à 120°C pendant 15 h, calcinés à 530°C sous un courant d'air sec pendant 2 h puis calcinés à 700°C en présence de vapeur d'eau.

L'échantillon ainsi obtenu est nommé SA2.

Les extrudés ainsi obtenus sont séchés à 150°C, puis calcinés à 550°C,

Les caractéristiques du support SA2 sont les suivantes :

La composition du support est 47,7 % $Al_2O_3$- 52,3 % $SiO_2$.

La surface BET est de 282 m$^2$/g.

Le volume poreux total, mesuré par adsorption d'azote, est de 0,41 ml/g

Le diamètre poreux moyen, mesuré par porosimétrie au mercure, est de 59 Å.

Le rapport entre le volume V2, mesuré par porosimétrie au mercure, compris entre le $D_{moyen}$-30 Å et le $D_{moyen}$ + 30 Å sur le volume mercure total est de 0,90.

Le volume V3, mesuré par porosimétrie au mercure, compris dans les pores de diamètres supérieurs à $D_{moyen}$ + 30 Å est de 0,035 ml/g.

Le volume V6, mesuré par porosimétrie au mercure, compris dans les pores de diamètres supérieurs à $D_{moyen}$ + 15 Å est de 0,04 ml/g,

Le rapport entre la surface adsorption et la surface BET est de 0,75.

Le volume poreux, mesuré par porosimétrie au mercure, compris dans les pores de diamètre supérieurs à 140 Å est de 0,011 ml/g,

Le volume poreux, mesuré par porosimétrie au mercure, compris dans les pores de diamètre supérieurs à 160 Å est de 0,01 ml/g,

Le volume poreux, mesuré par porosimétrie au mercure, compris dans les pores de diamètre supérieurs à 200 Å est de 0,009 ml/g,

Le volume poreux, mesuré par porosimétrie au mercure, est compris dans les pores de diamètre supérieurs à 500 Å est de 0,001 ml/g,

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

Le rapport B/L du support est de 0,13.

La densité de remplissage tassée du catalyseur est de 1.07 g/cm$^3$.

La teneur en sodium atomique est de 300 +/- 20 ppm. La teneur en soufre atomique est de 1500 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm et qui s'étend entre 20 et 100 ppm. Ce massif peut être décomposé en au moins deux espèces. L'espèce prédominante de ce massif correspondraient aux atomes d'$Al_{IV}$ (tétraédrique). La proportion des $Al_{VI}$ octaédriques est de 67%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,25 et l'autre.zone a un rapport Si/Al déterminé par MET de 6.

Exemple 4: Préparation des catalyseurs d'hydrocraquage utilisables dans le procédé selon l'invention (C1, C2, C3).

Le catalyseur C1 est obtenu par imprégnation à sec du support SiAl-1 (sous forme d'extrudés); préparé dans l'exemple 1 par une solution d'acide hexachloroplatinique $H_2PtCl_6$ dissous dans un volume de solution correspondant au volume poreux total à imprégner. Les extrudés imprégnés sont ensuite calcinés à 550°C sous air pendant 4 heures. La teneur en platine est de 0,48% poids et sa dispersion mesurée par titrage $H_2$-$O_2$ est de 82% et sa répartition est uniforme dans les extrudés.

Le catalyseur C2 est obtenu par imprégnation à sec du support SiAl-2 (sous forme d'extrudés), préparé dans l'exemple 2 par une solution dichlorure de platine tétramine $Pt(NH_3)_4Cl_2$ dissous dans un volume de solution correspondant au volume poreux total à imprégner. Les extrudés imprégnés sont ensuite calcinés à 550°C sous air pendant 4 heures. La teneur en platine est de 0,57% poids et sa dispersion mesurée par titrage $H_2$-$O_2$ est de 62% et sa répartition est uniforme dans les extrudés.

Le catalyseur C3 est obtenu par imprégnation à sec du support SiAl-3 (sous forme d'extrudés), préparé dans l'exemple 3 par une solution d'acide hexachloroplatinique $H_2PtCl_6$ dissous dans un volume de solution correspondant au volume poreux total à imprégner. Les extrudés imprégnés sont ensuite calcinés à 550°C sous air pendant 4 heures. La teneur en platine est de 0,41 % poids et sa dispersion mesurée par titrage $H_2$-$O_2$ est de 88% et sa répartition est uniforme dans les extrudés.

Exemple 5 : Evaluation des catalyseurs C1, C2, C3 dans un procédé selon l'invention : hydrocraquage d'une charge paraffinique issue de la synthèse Fischer-Tropsch

Les catalyseurs dont la préparation est décrite dans l'exemple 4 sont utilisés pour réaliser l'hydrocraquage d'une charge paraffinique issue d'une unité Fischer-Tropsch dont les principales caractéristiques sont données ci-après:

| | |
|---|---|
| Densité à 20°C | 0,787 |
| **Distillation simulée DS** | |
| DS : Point initial | 170 |
| DS : 1 0%p°C | 197 |
| DS : 50%p°C | 350 |
| DS : 90%p°C | 537 |
| DS : Point final °C | 674 |
| Teneur en fraction 370°C+ (%pds) | 44 |

Les catalyseurs C1, C2, C3 sont mis en oeuvre selon le procédé de l'invention en utilisant une unité pilote comportant 1 réacteur à lit fixe traversé, les fluides circulent de bas en haut (up-flow).

Préalablement au test d'hydrocraquage, les catalyseurs sont réduits à 120 bars, à 450°C sous hydrogène pur.

Après réduction, le test catalytique s'effectue dans les conditions suivantes :

Pression totale     5,5 MPa     - T=356°C

Rapport H2 sur charge de 1000 normaux litres/litre de charge

La vitesse spatiale (VVH) est égale à 0,9 h-1.

Les performances catalytiques sont exprimées par la conversion nette en produits ayant un point d'ébullition inférieurs à 370°C, par la sélectivité nette en distillat moyen coupe 150-370°C et le rapport rendement Gasoil/rendement kérosène dans la fraction distillat moyen. Elles sont exprimées à partir des résultats de distillation simulée.

La conversion nette CN est prise égale à :

$$CN\ 370°C^{-} = [\ (\%\ de\ 370°C^{-}_{effluents}) - (\%\ de\ 370°C^{-}_{charge})\ ]\ /\ [\ 100 - (\%\ de\ 370°C^{-}_{charge})]$$

avec

% de 370°C $_{effluents}$ = teneur massique en composés ayant des points d'ébullition inférieurs à 370°C dans les effluents,
et
% de 370°C $_{charge}$ = teneur massique en composés ayant des points d'ébullition inférieurs à 370°C dans la charge.

Le rendement gasoil/rendement kérosène (rapport Go./Ker.) dans la fraction distillat moyen est prise égale à:

Rapport Go./Ker. = rendement de la fraction (250°C-370°C) de l'effluent / rendement de la fraction (150°C - 250°C) dans l'effluent.

Les performances catalytiques obtenues sont données dans les tableaux 1 et 2 ci-après.

Les conversions nettes en produits ayant un point d'ébullition inférieur à 370°C, telle que définie précédemment, sont, dans les conditions opératoires décrites ci-dessus, fournies pour les catalyseurs C1, C2 et C3 dans le tableau 1.

Tableau 1 : Conversions nettes en 370°C-

|  | C1 | C2 | C3 |
|---|---|---|---|
| CN 370°C (% poids) | 74,8 | 71,4 | 74,2 |

Tableau 2 : Rendements des produits formés :

| Coupes - | Rendements (% poids) $C_1$-$C_4$ | Rendements (% poids) $C_5$-150°C | Rendements (% poids) 150-370°C | Rendements (% poids) 370°C+ | Rapport Go./Ker. |
|---|---|---|---|---|---|
| C1 | 1,2 | 10,2 | 77,8 | 11,1 | 2,05 |
| C2 | 1,0 | 9,9 | 76,7 | 12,7 | 2,10 |
| C3 | 1,3 | 10,5 | 77,1 | 11,5 | 2,06 |

Tableau 3 : Principales propriétés des produits formés :

| Coupes | 150-250°C Coupe kérosène | 250-370°C Coupe Gazole |
|---|---|---|
| Catalyseur C1 | - Point de fumée > 50 mm - <br> - Point de congélation - 48°C - | Cétane > 70 <br> Point d'écoulement -18°C |
| Catalyseur C2 | - Point de fumée > 50 mm - | Cétane > 70 |

(suite)

| Coupes | 150-250°C Coupe kérosène | 250-370°C Coupe Gazole |
|---|---|---|
| | - Point de congélation - 42°C - | Point d'écoulement -15°C |
| Catalyseur C3 | - Point de fumée > 50 mm - <br> - Point de congélation - 48°C - | Cétane > 70 <br> Point d'écoulement -20°C |

Ces résultats, montrent (tableaux 1 et 2) que l'utilisation du procédé selon l'invention permet par hydrocraquage d'une charge paraffinique issue du procédé de synthèse Fischer-Tropsch d'obtenir de très bons rendements en distillats moyens, coupes 150-250 (kérosène) et 250-370°C (gazole). Par ailleurs, ces produits présentent d'excellentes propriétés et en particulier d'excellentes propriétés à froid comme l'indique le tableau 3.

**Revendications**

1. Procédé de production de distillats moyens à partir d'une charge paraffinique produite par synthèse Fischer-Tropsch, utilisant un catalyseur d'hydrocraquage/hydroisomérisation qui comporte:

   - au moins un élément hydro-déshydrogénant choisi dans le groupe formé par les éléments nobles du groupe VIII de la classification périodique
   - un support non zéolitique à base de silice-alumine contenant une quantité supérieure à 5% poids et inférieure ou égale à 95% poids de silice ($SiO_2$),
   - un diamètre moyen poreux, mesuré par porosimétrie au mercure, compris entre 20 et 140 Å,
   - un volume poreux total, mesuré par porosimétrie au mercure, compris entre 0,1 ml/g et 0,6 ml/g,
   - un volume poreux total, mesuré par porosimétrie azote, compris entre 0,1 ml/g et 0,6 ml/g,
   - une surface spécifique BET comprise entre 100 et 550 m$^2$/g,
   - un volume poreux, mesuré par porosimétrie au mercure, compris dans les pores de diamètre supérieurs à 140Å inférieur à 0,1 ml/g ,
   - un volume poreux, mesuré par porosimétrie au mercure, compris dans les pores de diamètre supérieurs à 500 Å inférieur à 0,01 ml/g.
   - un diagramme de diffraction X qui contient au moins les raies principales caractéristiques d'au moins une des alumines de transition comprise dans le groupe composé par les alumines alpha, rhô, chi, eta, gamma, kappa, thêta et delta.

2. Procédé selon la revendication 1 utilisant un catalyseur dans lequel la proportion des Al$_V$ octaédriques déterminée par l'analyse des spectres RMN MAS du solide de $^{27}$Al est supérieure à 50%.

3. Procédé selon l'une des revendications 1 à 2 utilisant un catalyseur qui comprend au moins ur élément dopant choisi dans le groupe formé par le phosphore, le bore et le silicium et dépose sur le catalyseur.

4. Procédé selon l'une des revendications précédentes dans lequel le catalyseur a une teneur en impuretés cationiques inférieure à 0,1 % poids.

5. Procédé selon l'une des revendications précédentes dans lequel le catalyseur a une teneur en impuretés anioniques est inférieure à 0,5 % poids.

6. Procédé selon l'une des revendications précédentes utilisant un catalyseur tel que le diagramme de diffraction X du support contient au moins les raies principales caractéristiques d'au moins une des alumines de transition comprise dans le groupe composé par les alumines êta, thêta, delta et gamma.

7. Procédé selon l'une des revendications précédentes utilisant un catalyseur tel que le diagramme de diffraction X du support contient au moins les raies principales caractéristiques d'au moins une des alumines de transition comprise dans le groupe composé par les alumines êta et gamma.

8. Procédé selon l'une des revendications précédentes utilisant un catalyseur tel que:

- le rapport entre le volume V2, mesuré par porosimétrie au mercure, compris entre le $D_{moyen}$-30 Å et le $D_{moyen}$ + 30 Å sur le volume mercure total est supérieur à 0,6,

- le volume V3, mesuré par porosimétrie au mercure, compris dans les pores de diamètre supérieur à $D_{moyen}$ + 30 Å est inférieur à 0,1 ml/g,

- le volume V6, mesuré par porosimétrie au mercure, compris dans les pores de diamètre supérieur à $D_{moyen}$ + 15 Å est inférieur à 0,2 ml/g.

9.  Procédé selon l'une des revendications précédentes tel que le diamètre moyen poreux du catalyseur est compris entre 40 et 120 Å.

10.  Procédé selon l'une des revendications précédentes tel que la densité de remplissage tassée du catalyseur est supérieure à 0,85 g/cm$^3$.

11.  Procédé selon l'une des revendications précédentes tel que l'acidité du support de catalyseur mesurée par suivi IR de la thermo-désorption de la pyridine est telle que le rapport B/L (rapport du nombre de sites de Bronsted /nombre de sites de Lewis) est compris entre 0,05 et 1.

12.  Procédé de production de distillats moyens à partir d'une charge paraffinique produite par synthèse Fischer-Tropsch comprenant les étapes successives suivantes : séparation d'une seule fraction dite lourde à point d'ébullition initial compris entre 120-200°C,

     a) hydrotraitement d'une partie au moins de ladite fraction lourde,
     b) fractionnement en au moins 3 fractions : au moins une fraction intermédiaire ayant un point d'ébullition initial T1 compris entre 120 et 200°C, et un point d'ébullition final T2 supérieur à 300°C et inférieur à 410°C, au moins une fraction légère bouillant au-dessous de la fraction intermédiaire, au moins une fraction lourde bouillant au-dessus de la fraction intermédiaire.
     c) passage d'une partie au moins de ladite fraction intermédiaire dans un procédé selon l'une des revendications 1 à 11 sur un catalyseur non zéolitique d'hydroisomérisation /hydrocraquage,
     d) passage dans un procédé selon l'une des revendications 1 à 9 sur un catalyseur non zéolitique d'hydroisomérisation / hydrocraquage d'une partie au moins de ladite fraction lourde,
     e) distillation des fractions hydrocraquées / hydroisomérisées pour obtenir des distillats moyens, et recyclage de la fraction résiduelle bouillant au-dessus desdits distillats moyens dans l'étape (e) sur le catalyseur traitant la fraction lourde.

13.  Procédé de production de distillats moyens à partir d'une charge paraffinique produite par synthèse Fischer-Tropsch comprenant les étapes successives suivantes :

     a) séparation d'au moins une fraction légère de la charge de façon à obtenir une seule fraction dite lourde à point d'ébullition initial compris entre 120-200°C,
     b) éventuel hydrotraitement de ladite fraction lourde, éventuellement suivi d'une étape
     c) d'enlèvement d'au moins une partie de l'eau,
     d) passage dans un procédé selon l'une des revendications 1 à 11 d'une partie au moins de ladite fraction éventuellement hydrotraitée, la conversion sur le catalyseur d'hydroisomérisation/hydrocraquage des produits à points d'ébullition supérieurs ou égaux à 370°C en produits à points d'ébullition inférieures à 370°C est supérieure à 80% pds,
     e) distillation de la fraction hydrocraquée/hydroisomérisée pour obtenir des distillats moyens, et recyclage dans l'étape d) de la fraction résiduelle bouillant au-dessus desdits distillats moyens.

14.  Procédé de production de distillats moyens à partir d'une charge paraffinique produite par synthèse Fischer-Tropsch comprenant les étapes successives suivantes :

     a) Fractionnement (étape a) de la charge en au moins 3 fractions :

         - au moins une fraction intermédiaire ayant un point d'ébullition initial T1 compris entre 120 et 200°C, et un point d'ébullition final T2 supérieur à 300°C et inférieur à 410°C,
         - au moins une fraction légère bouillant au-dessous de la fraction intermédiaire,
         - au moins une fraction lourde bouillant au-dessus de la fraction intermédiaire.

b) Hydrotraitement (étape b) d'au moins une partie de ladite fraction intermédiaire, puis passage (étape d) dans un procédé de traitement d'au moins une partie de la fraction hydrotraitée sur un catalyseur d'hydrocraquage/ hydroisomérisation.

f) Passage (étape f) dans un procédé de traitement d'une partie au moins de ladite fraction lourde sur un catalyseur d'hydrocraquage/hydroisomérisation avec une conversion des produits à points d'ébullition supérieurs ou égaux à 370°C. en produits à points d'ébullition inférieurs à 370°C supérieure à 80% poids.

e) et g) Distillation (étapes e et g) d'au moins une partie des fractions hydrocraquées /hydroisomérisées pour obtenir des distillats moyens?

et l'un au moins desdits procédés de traitement est le procédé selon l'une des revendications 1 à 11.

**15.** Procédé de production de distillats moyens à partir d'une charge paraffinique produite par synthèse Fischer-Tropsch comprenant les étapes successives suivantes :

a) éventuel fractionnement de la charge en au moins une fraction lourde à point d'ébullition initial compris entre 120 et 200°C, et au moins une fraction légère bouillant en-dessous de ladite fraction lourde,

b) éventuel hydrotraitement d'une partie au moins de la charge ou de la fraction lourde, éventuellement suivi d'une étape c)

c) élimination d'au moins une partie de l'eau,

d) passage d'une partie au moins de l'effluent ou de la fraction éventuellement hydrotraité dans un procédé de traitement sur un premier catalyseur d'hydroisomérisation / hydrocraquage contenant au moins un métal noble du groupe VIII,

e) distillation de l'effluent hydroisomérisé / hydrocraqué pour obtenir des distillats moyens (kérosène, gasoil) et une fraction résiduelle bouillant au-dessus des distillats moyens,

f) sur un second catalyseur d'hydroisomérisation / hydrocraquage contenant au moins un métal noble du groupe VIII, passage dans un procédé de traitement d'au moins une partie de ladite fraction lourde résiduelle et/ou d'une partie desdits distillats moyens, et distillation de l'effluent résultant pour obtenir des distillats moyens,

et l'un au moins desdits procédés de traitement est le procédé selon l'une des revendications 1 à 11.

**16.** Procédé de production de distillats moyens à partir d'une charge paraffinique produite par synthèse Fischer-Tropsch comprenant les étapes successives suivantes :

a) séparation de la charge en au moins une fraction à faible température d'ébullition (B) plus riche en composés oxygénés et au moins une fraction à haute température d'ébullition (A) moins riche en composés oxygénés ;

b) soumission de ladite fraction (B) à un traitement hydrogénant dans des conditions de nature à éviter toute variation substantielle dans son poids moléculaire moyen pour obtenir un mélange hydrogéné d'hydrocarbures substantiellement non oxygénés; .

c) recombinaison d'au moins une partie dudit mélange hydrogéné selon l'étape (b) avec ladite fraction (A) pour former un mélange (C) d'hydrocarbures linéaires avec un contenu réduit en hydrocarbures oxygénés et soumission dudit mélange (C) à un traitement d'hydrocraquage en présence d'un catalyseur d'hydroisomérisation/ hydrocraquage, pour convertir au moins 40 % de ladite fraction à haut point d'ébullition en une fraction d'hydrocarbures pouvant être distillés à une température inférieure à 370°C;

d) séparation d'au moins une fraction d'hydrocarbures du produit obtenu à l'étape (c) dont la température de distillation est dans le domaine des distillats moyens, procédé dans lequel le procédé d'hydrocraquage de l'étape c) est le procédé selon l'une des revendications 1 à 11.

**17.** Procédé selon l'une des revendications précédentes dans lequel le catalyseur d'hydrocraquage/hydroisomérisation est à base de platine et/ou palladium.

**18.** Procédé selon l'une des revendications précédentes dans lequel le catalyseur d'hydrocraquage/hydroisomérisation contient de 0,05 à 10 % de métal noble du groupe VIII.

**Claims**

**1.** Process for preparing middle distillates from a paraffinic feedstock produced by Fischer-Tropsch synthesis, using a hydrocracking/hydroisomerization catalyst which comprises:

- at least one hydro-dehydrogenating element chosen from the group formed by the noble elements of Group VIII of the periodic table.
- a non-zeolitic silica-alumina-based support containing a quantity greater than 5% by weight and lower than or equal to 95% by weight of silica ($SiO_2$).
- an average pore diameter, measured by mercury porosimetry, comprised between 20 and 140 Å,
- a total pore volume, measured by mercury porosimetry, comprised between 0.1 ml/g and 0.6 ml/g,
- a total pore volume, measured by nitrogen porosimetry comprised between 0.1 ml/g and 0.6 ml/g,
- a BET specific surface comprised between 100 and 550 $m^2$/g,
- a pore volume measured by mercury porosimetry, comprised in the pores with a diameter larger than 140 Å, smaller than 0.1 ml/g,
- a pore volume, measured by mercury porosimetry, comprised in the pores with a diameter larger than 500 Å, smaller than 0.01 ml/g,
- an X-ray diffraction diagram which contains at least the main lines characteristic of at least one of the transition aluminas comprised in the group made up of the alpha, rho, chi, eta, gamma, kappa, theta and delta aluminas.

2. Process according to claim 1 using a catalyst in which the proportion of the octahedral $Al_{VI}$, atoms determined by analysis of the MAS NMR spectra of the $^{27}$Al solid is greater than 50%.

3. Process according to claims 1 to 2 using a catalyst which comprises at least one doping element chosen from the group formed by phosphorus, boron and silicon and deposited on the catalyst.

4. Process according to one of the previous claims in which the catalyst has a cationic impurities content of less than 0.1 % by weight.

5. Process according to one of the previous claims in which the catalyst has an anionic impurities content of less than 0.5% by weight.

6. Process according to one of the previous claims using a catalyst such that the X-ray diffraction diagram of the support contains at least the main lines characteristic of at least one of the transition aluminas comprised in the group made up of the eta, theta, delta and gamma aluminas.

7. Process according to one of the previous claims using a catalyst such that the X-ray diffraction diagram of the support contains at least the main lines characteristic of at least one of the transition aluminas comprised in the group made up of the eta and gamma aluminas.

8. Process according to one of the previous claims using a catalyst such that:

- the ratio between the volume V2, measured by mercury porosimetry, comprised between the $D_{average}$ - 30 Å and the $D_{average}$ + 30 Å, over the total mercury volume is 0.6.
- the volume V3, measured by mercury porosimetry, comprised in the pores with diameters greater than $D_{average}$ + 30 Å, is less than 0.1 ml/g.
- the volume V6, measured by mercury porosimetry, comprised in the pores with diameters greater than $D_{average}$ + 15 Å, is less than 0.2 ml/g.

9. Process according to one of the previous claims, such that the average pore diameter of the catalyst is comprised between 40 and 120 Å.

10. Process according to one of the previous claims, such that the compacted filling density of the catalyst is greater than 0.85 g/$cm^3$.

11. Process according to one of the previous claims, such that the acidity of the catalyst support measured by IR monitoring of the thermo-desorption of the pyridine is such that the B/L ratio (ratio of the number of Bronsted sites/ number of Lewis sites) is comprised between 0.05 and 1.

12. Process for producing middle distillates from a paraffinic feedstock produced by Fischer-Tropsch synthesis comprising the following successive stages: separation of a single "heavy" fraction with an initial boiling point comprised between 120 and 200°C.

a) hydrotreatment of at least part of said heavy fraction,

b) fractionation into at least three fractions: at least one intermediate fraction having an initial boiling point T1 comprised between 120 and 200°C, and a final boiling point T2 greater than 300°C and less than 410°C, at least one light fraction boiling below the intermediate fraction, at least one heavy fraction boiling above the intermediate fraction,

c) passage of at least part of said intermediate fraction into a process according to one of claims 1 to 11 on a hydroisomerization/hydrocracking non-zeolitic catalyst,

d) passage into a process according to one of claims 1 to 9 on a hydroisomerization/hydrocracking non-zeolitic catalyst, of at least part of said heavy fraction,

e) distillation of the hydrocracked/hydroisomerized fractions in order to obtain middle distillates, and recycling of the residual fraction boiling above said middle distillates into Stage (e) on the catalyst treating the heavy fraction.

**13.** Process for producing middle distillates from a paraffinic feedstock produced by Fischer-Tropsch synthesis comprising the following successive stages:

a) separation of at least one light fraction from the feedstock in order to obtain a single "heavy" fraction with an initial boiling point comprised between 120 and 200°C.

b) optional hydrotreatment of said heavy fraction, optionally followed by a stage

c) of removal of at least part of the water,

d) passage into a process according to one of claims 1 to 11 of at least part of said fraction optionally hydrotreated, the conversion on the hydroisomerization/hydrocracking catalyst of the products with boiling points above or equal to 370°C, into products with boiling points below 370°C is greater than 80% by weight.

e) distillation of the hydrocracked/hydroisomerized fraction in order to obtain middle distillates, and recycling into Stage (d) of the residual fraction boiling above said middle distillates.

**14.** Process for producing middle distillates from a paraffinic feedstock produced by Fischer-Tropsch synthesis comprising the following successive stages:

a) Fractionation (Stage a) of the feedstock into at least 3 fractions:

- at least one intermediate fraction having an initial boiling point T1 comprised between 120 and 200°C, and a final boiling point T2 greater than 300°C and less than 410°C,
- at least one light fraction boiling below the intermediate fraction,
- at least one heavy fraction boiling above the intermediate fraction,

b) Hydrotreatment (Stage b) of at least part of said intermediate fraction, then passage (Stage d) into a process of treatment of at least part of the hydrotreated fraction on a hydroisomerization/hydrocracking catalyst,

f) Passage (Stage f) into a process of treatment of at least part of said heavy fraction on a hydroisomerization/ hydrocracking catalyst, with conversion of the products with boiling points above or equal to 370°C, to products with boiling points below 370°C, greater than 80% by weight.

e and g) Distillation (Stages e and g) of at least part of the hydrocracked/hydroisomerized fractions in order to obtain middle distillates,

and at least one of said treatment processes is the process according to one of claims 1 to 11.

**15.** Process for producing middle distillates from a paraffinic feedstock produced by Fischer-Tropsch synthesis comprising the following successive stages:

a) optional fractionation of the feedstock into at least one heavy fraction with an initial boiling point comprised between 120 and 200°C, and at least one light fraction boiling below said heavy fraction,

b) optional hydrotreatment of at least part of the feedstock or the heavy fraction, optionally followed by a Stage c)

c) elimination of at least part of the water,

d) passage of at least part of the optionally hydrotreated effluent or fraction into a treatment process on a first hydroisomerization/hydrocracking catalyst containing at least one noble metal of Group VIII,

e) distillation of the hydroisomerized/hydrocracked effluent in order to obtain middle distillates (kerosene, diesel oil) and a residual fraction boiling above the middle distillates,

f) on a second hydroisomerization/hydrocracking catalyst containing at least one noble metal of Group VIII, passage into a treatment process of at least part of said residual heavy fraction and/or part of said middle distillates and distillation of the resultant effluent in order to obtain middle distillates, and at least one of said treatment processes is the process according to one of claims 1 to 11.

16. Process for producing middle distillates from a paraffinic feedstock produced by Fischer-Tropsch synthesis comprising the following successive stages:

a) separation of the feedstock into at least one fraction with a low boiling temperature (B) richer in oxygenated compounds, and at least one fraction with a high boiling temperature (A) less rich in oxygenated compounds;
b) subjection of said fraction (B) to a hydrogenating treatment under conditions of a nature to avoid any substantial variation in its average molecular weight in order to obtain hydrogenated mixture of substantially non-oxygenated hydrocarbons;
c) recombination of at least part of said hydrogenated mixture according to Stage (b) with said fraction (A) in order to form a mixture (C) of linear hydrocarbons with a reduced content of oxygenated hydrocarbons and subjection of said mixture (C) to a hydrocracking treatment in the presence of a hydroisomerization/hydrocracking catalyst, in order to convert at least 40% of said fraction with a high boiling point to a fraction of hydrocarbons which can be distilled at a temperature below 370°C;
d) separation of at least one fraction of hydrocarbons from the product obtained in Stage (c), the distillation temperature of which is within the range of the middle distillates; process in which the hydrocracking process of Stage c) is the process according to one of claims 1 to 11.

17. Process according to one of the previous claims, in which the hydrocracking/hydroisomerization catalyst is based on platinum/palladium.

18. Process according to one of the previous claims, in which the hydrocracking/hydroisomerization catalyst contains from 0.05 to 10% of noble metal of Group VIII.

**Patentansprüche**

1. Verfahren zur Herstellung von Mitteldestillaten aus einer Paraffinbeschickung, die durch Fischer-Tropsch-Synthese hergestellt wurde, unter Verwendung eines Katalysators zum/zur Hydrocracken/Hydroisomerisation, das umfasst:

- mindestens ein hydro-dehydrierendes Element, ausgewählt aus der Gruppe, gebildet aus den edlen Elementen der Gruppe VIII des Periodensystems der Elemente,
- einen nicht zeolitischen Träger auf der Basis von Siliciumdioxid-Aluminiumoxid, der eine Menge größer als 5 Gew.-% und kleiner oder gleich 95 Gew.-% Siliciumdioxid ($SiO_2$) enthält,
- einen durchschnittlichen Porendurchmesser, gemessen mittels Quecksilber-Porosimetrie, im Bereich zwischen 20 und 140 Å,
- ein gesamtes Porenvolumen, gemessen mittels Quecksilber-Porosimetrie, im Bereich zwischen 0,1 ml/g und 0,6 ml/g,
- ein gesamtes Porenvolumen, gemessen mittels Stickstoff-Porosimetrie, im Bereich zwischen 0,1 ml/g und 0,6 ml/g,
- eine spezifische Oberfläche BET im Bereich zwischen 100 und 550 $m^2$/g,
- ein Porenvolumen, gemessen mittels Quecksilber-Porosimetrie, im Bereich zwischen Poren mit einem Durchmesser größer als 140 Å und kleiner als 0,1 ml/g,
- ein Porenvolumen, gemessen mittels Quecksilber-Porosimetrie, im Bereich zwischen Poren mit einem Durchmesser größer als 500 Å und kleiner als 0,01 ml/g.
- ein Röntgendiffraktionsdiagramm, das mindestens die charakteristischen Hauptlinien von mindestens einem der Übergangsaluminiumoxide enthält, die die Gruppe, bestehend aus den alpha-, rho-, chi-, eta-, gamma-, kappa-, theta- und delta-Aluminiumoxiden, umfasst.

2. Verfahren nach Anspruch 1, unter Verwendung eines Katalysators, wobei der Anteil des oktaedrischen $Al_{VI}$, der mittels Analyse der MAS NMR-Spektren des $^{27}$Al-Festkörpers bestimmt wird, größer als 50 % ist.

3. Verfahren nach einem der Ansprüche 1 bis 2, unter Verwendung eines Katalysators, der mindestens ein dotierendes Element umfasst, ausgewählt aus der Gruppe, gebildet aus Phosphor, Bor und Silicium, und das auf dem Katalysator abgelagert ist.

**4.** Verfahren nach einem der vorherigen Ansprüche, wobei der Katalysator einen Gehalt an kationischen Verunreinigungen kleiner als 0,1 Gew.-% aufweist.

**5.** Verfahren nach einem der vorherigen Ansprüche, wobei der Katalysator einen Gehalt an anionischen Verunreinigungen kleiner als 0,5 Gew. -% aufweist.

**6.** Verfahren nach einem der vorherigen Ansprüche, unter Verwendung eines Katalysators, so dass das Röntgendiffraktionsdiagramm des Trägers mindestens die charakteristischen Hauptlinien mindestens eines der Übergangsaluminiumoxide enthält, die die Gruppe, bestehend aus den eta-, theta-, delta- und gamma-Aluminiumoxiden, umfasst.

**7.** Verfahren nach einem der vorherigen Ansprüche, unter Verwendung eines Katalysators, so dass das Röntgendiffraktionsdiagramm des Trägers mindestens die charakteristischen Hauptlinien mindestens eines der Übergangsaluminiumoxide enthält, die die Gruppe, bestehend aus den eta- und gamma-Aluminiumoxiden, umfasst.

**8.** Verfahren nach einem der vorherigen Ansprüche, unter Verwendung eines Katalysators, so dass:

- das Verhältnis zwischen dem Volumen V2, gemessen mittels Quecksilber-Porosimetrie, im Bereich zwischen $D_{mittel}$ A und $D_{mittel}$ + 30 zum gesamten Quecksilbervolumen größer als 0,6 ist,
- das Volumen V3, gemessen mittels Quecksilber-Porosimetrie, im Bereich zwischen Poren mit einem Durchmesser größer als $D_{mittel}$ + 30 kleiner als 0,1 ml/g ist,
- das Volumen V6, gemessen mittels Quecksilber-Porosimetrie, im Bereich zwischen Poren mit einem Durchmesser größer als $D_{mittel}$ +15 kleiner als 0,2 ml/g ist.

**9.** Verfahren nach einem der vorherigen Ansprüche, so dass der mittlere Porendurchmesser des Katalysators im Bereich zwischen 40 und 120 Å liegt.

**10.** Verfahren nach einem der vorherigen Ansprüche, so dass die verdichtete Fülldichte des Katalysators größer als 0,85 g/cm$^3$ ist.

**11.** Verfahren nach einem der vorherigen Ansprüche, so dass die Azidität des Katalysatorträgers, gemessen mittels IR-Monitoring der Thermodesorption des Pyridins so ist, dass das Verhältnis B/L (Verhältnis der Anzahl an Brönstedstellen zur Anzahl an Lewisstellen) im Bereich zwischen 0,05 und 1 liegt.

**12.** Verfahren zur Herstellung von Mitteldestillaten aus einer Paraffinbeschickung, die durch Fischer-Tropsch-Synthese hergestellt wurde, das die nachfolgenden aufeinander folgenden Schritte umfasst: Trennung einer einzigen so genannten schweren Fraktion mit einem Anfangssiedepunkt im Bereich zwischen 120 und 200 °C,

a) Hydrobehandlung mindestens eines Teils der schweren Fraktion,
b) Fraktionierung in mindestens 3 Fraktionen: mindestens eine Zwischenfraktion, die einen Anfangssiedepunkt T1 im Bereich zwischen 120 und 200 °C, und einen Endsiedepunkt T2 größer als 300 °C und kleiner als 410 °C aufweist, mindestens eine leichte Fraktion, die unterhalb der Zwischenfraktion siedet, mindestens eine schwere Fraktion, die oberhalb der Zwischenfraktion siedet.
c) Übergang mindestens eines Teils der Zwischenfraktion in ein Verfahren gemäß einer der Ansprüche 1 bis 11 auf einem nicht-zeolitischen Katalysator zur/zum Hydroisomerisation/Hydrocracken,
c) Übergang in ein Verfahren gemäß einem der Ansprüche 1 bis 9 mindestens eines Teils der schweren Fraktion auf einen nicht-zeolitischen Katalysator zur/zum Hydroisomerisation/Hydrocracken,
e) Destillieren der hydrogecrackten/hydroisomerisierten Fraktionen, um Mitteldestillate zu erhalten, und Recycling der Restfraktion, die oberhalb der Mitteldestillate siedet, in Schritt (e) auf dem Katalysator, der die schwere Fraktion behandelt.

**13.** Verfahren zur Herstellung von Mitteldestillaten aus einer Paraffinbeschickung, die durch Fischer-Tropsch-Synthese hergestellt wurde, das die nachfolgenden aufeinander folgenden Schritte umfasst:

a) Trennen mindestens einer leichten Fraktion der Beschickung, um eine so genannte schwere Fraktion mit einem Anfangssiedepunkt im Bereich zwischen 120 und 200 °C zu erhalten,
b) gegebenenfalls Hydrobehandeln der schweren Fraktion, gegebenenfalls gefolgt von einem Schritt
c) zum Entfernen mindestens eines Teils des Wassers,
d) Übergang in ein Verfahren gemäß einem der Ansprüche 1 bis 11 mindestens eines Teils der gegebenenfalls hydrobehandelten Fraktion, wobei die Umwandlung auf dem Katalysator zur/zum Hydroisomerisation/Hydrocracken der Produkte mit Siedepunkten größer oder gleich 370 °C in Produkte mit Siedepunkten kleiner 370 °C größer als 80 Gew.-% ist,

e) Destillieren der hydrogekrackten/hydroisomerisierten Fraktion, um Mitteldestillate zu erhalten, und Recycling in Schritt d) der Restfraktion, die oberhalb der Mitteldestillate siedet.

14. Verfahren zur Herstellung von Mitteldestillaten aus einer Paraffinbeschickung, die durch Fischer-Tropsch-Synthese hergestellt wurde, das die nachfolgenden aufeinander folgenden Schritte umfasst:

a) Fraktionierung (Schritt a) der Beschickung in mindestens 3 Fraktionen:

- mindestens eine Zwischenfraktion, die einen Anfangssiedepunkt T1 im Bereich zwischen 120 und 200 °C, und einen Endsiedepunkt T2 größer als 300 °C und kleiner als 410 °C aufweist,
- mindestens eine leichte Fraktion, die unterhalb der Zwischenfraktion siedet,
- mindestens eine schwere Fraktion, die oberhalb der Zwischenfraktion siedet.

b) Hydrobehandlung (Schritt b) mindestens eines Teils der Zwischenfraktion, dann Übergang (Schritt d) in ein Verfahren zur Behandlung mindestens eines Teils der hydrobehandelten Fraktion auf einem Katalysator zum/zur Hydrocracken/Hydroisomerisation.

f) Übergang (Schritt f) in ein Verfahren zur Behandlung mindestens eines Teils der schweren Fraktion auf einem Katalysator zum/zur Hydrocracken/Hydroisomerisation, wobei die Umwandlung der Produkte mit Siedepunkten größer oder gleich 370 °C in Produkte mit Siedepunkten kleiner als 370 °C größer als 80 Gew.-% ist.

e) und g) Destillieren (Schritte e und g) mindestens eines Teils der hydrogecrackten/hydroisomerisierten Fraktionen, um Mitteldestillate zu erhalten.

und mindestens eines der Verfahren zur Behandlung das Verfahren gemäß einem der Ansprüche 1 bis 11 ist.

15. Verfahren zur Herstellung von Mitteldestillaten aus einer Paraffinbeschickung, die durch Fischer-Tropsch-Synthese hergestellt wurde, das die nachfolgenden aufeinander folgenden Schritte umfasst:

a) gegebenenfalls Fraktionierung der Beschickung in mindestens eine schwere Fraktion mit einem Anfangssiedepunkt im Bereich zwischen 120 und 200 °C, und mindestens eine leichte Fraktion, die unterhalb der schweren Fraktion siedet,

b) gegebenenfalls Hydrobehandlung mindestens eines Teils der Beschickung oder der schweren Fraktion, gegebenenfalls gefolgt von einem Schritt c)

c) zum Beseitigen mindestens eines Teils des Wassers,

d) Übergang mindestens eines Teils des abfließenden Mediums oder der gegebenenfalls hydrobehandelten Fraktion in ein Verfahren zur Behandlung auf einem ersten Katalysator zur/zum Hydroisomerisation/Hydrocracken, der mindestens ein Edelmetall der Gruppe VIII enthält,

e) Destillieren des hydroisomerisierten/hydrogecrackten abfließenden Mediums, um Mitteldestillate (Kerosin, Diesel) und eine Restfraktion zu erhalten, die oberhalb der Mitteldestillate siedet,

f) auf einem zweiten Katalysator zur/zum Hydroisomerisation/Hydrocracken, der mindestens ein Edelmetall der Gruppe VIII enthält, Übergang in ein Verfahren zur Behandlung mindestens eines Teils der schweren Restfraktion und/oder eines Teils der Mitteldestillate, und Destillieren des resultierenden abfließenden Mediums, um Mitteldestillate zu erhalten,

und mindestens eines der Verfahren zur Behandlung, das Verfahren gemäß einem der Ansprüche 1 bis 11 ist.

16. Verfahren zur Herstellung von Mitteldestillaten aus einer Paraffinbeschickung, die durch Fischer-Tropsch-Synthese hergestellt wurde, das die nachfolgenden aufeinander folgenden Schritte umfasst:

a) Trennen der Beschickung in mindestens eine Fraktion mit einer niedrigen Siedetemperatur (B), die reicher an sauerstoffhaltigen Verbindungen ist, und mindestens eine Fraktion mit hoher Siedetemperatur (A), die weniger reich an sauerstoffhaltigen Verbindungen ist;

b) Unterziehen der Fraktion (B) einer hydrierenden Behandlung unter den Bedingungen der Natur, um jede wesentliche Abweichung ihres mittleren Molekulargewichts zu vermeiden, um eine hydrierte Kohlenwasserstoffmischung zu erhalten, die im Wesentlichen nicht mit Sauerstoff angereichert ist;

c) Rekombination mindestens eines Teils der hydrierten Mischung gemäß Schritt (b) mit Fraktion (A), um eine Mischung (C) aus linearen Kohlenwasserstoffen zu bilden, mit einem reduzierten Gehalt an mit Sauerstoff angereicherten Kohlenwasserstoffen, und Unterziehen der Mischung (C) einer Hydrocracking-Behandlung in Gegenwart eines Katalysators zur/zum Hydroisomerisation/Hydrocracken, um mindestens 40 % der Fraktion mit hohem Siedepunkt in eine Kohlenwasserstofffraktion umzuwandeln, die bei einer Temperatur kleiner als 370 °C destilliert werden kann;

d) Trennen mindestens einer Kohlenwasserstofffraktion des in Schritt (c) erhaltenen Produkt, dessen Destillationstemperatur im Bereich der Mitteldestillate liegt, ein Verfahren, bei dem das Verfahren des Hydrocrackens aus Schritt c) das Verfahren gemäß einer der Ansprüche 1 bis 11 ist.

17. Verfahren nach einem der vorherigen Ansprüche, wobei der Katalysator zum/zur Hydrocracken/Hydroisomerisation auf der Basis von Platin und/oder Palladium ist.

18. Verfahren nach einem der vorherigen Ansprüche, wobei der Katalysator zum/zur Hydrocracken/Hydroisomerisation 0,05 bis 10 % Edelmetall der Gruppe VIII enthält.

FIG. 1

FIG. 2

FIG. 3

EP 1 590 424 B1

FIG.4

FIG.5

FIG.6

H D T

5

2

1

4

3

6

H C K

7

12

D I S T

8

9

10

11

## RÉFÉRENCES CITÉES DANS LA DESCRIPTION

**Documents brevets cités dans la description**

- EP 583836 A
- EP 321303 A
- US 5370788 A
- US 2908635 A
- US 3423332 A
- US 3433747 A
- US 3451947 A
- US 3629152 A
- US 3650988 A
- US 3520654 A
- US 3630670 A
- US 3864461 A
- US 4154812 A
- US 4313923 A
- DE 3243193
- US 4371513 A
- FR 1261182
- FR 1381282
- FR 1357830
- US 3268295 A
- US 3245919 A
- WO 00101617 A
- US 1371808 A
- US 2892858 A
- US 4676928 A
- US 6030599 A
- US 4066574 A
- EP 0387109 A
- WO 0001617 A

**Littérature non-brevet citée dans la description**

- *The Journal of American Society,* 1938, vol. 60, 309
- **JEAN CHARPIN ; BERNARD RASNEUR.** *Techniques de l'ingénieur, traité analyse et caractérisation,* 1050-5
- **A. LECLOUX.** *Mémoires Société Royale des Sciences de Liège,* 1971, vol. 4, 169-209
- **B.C. LIPPENS ; J.J. STEGGERDA.** Physical and Chemical aspects of adsorbents and catalysts. Academic Press, 1970, 171-211
- Applied Heterogenous Catalysis. **J.F. LE PAGE ; J. COSYNS ; P. COURTY ; E. FREUND ; J-P. FRANCK ; Y. JACQUIN ; B. JUGUIN ; C. MARCILLY ; G. MARTINO ; J. MIQUEL.** Technip. 1987
- *Alcoa paper n°19,* 1972, 9-12
- **B.BEGUIN ; E.GARBOWSKI ; M.PRIMET.** *Journal of Catalysis,* 1991, vol. 127, 595